(19) Europäisches Patentamt
European Patent Office
Office européen des brevets

(11) EP 1 297 038 B1

(12) # EUROPÄISCHE PATENTSCHRIFT

(45) Veröffentlichungstag und Bekanntmachung des Hinweises auf die Patenterteilung:
**02.08.2006 Patentblatt 2006/31**

(21) Anmeldenummer: **01945304.2**

(22) Anmeldetag: **22.06.2001**

(51) Int Cl.:
***C08F 265/04*** *(2006.01)* ***C08F 291/02*** *(2006.01)*
***C08F 279/02*** *(2006.01)* ***C08L 51/04*** *(2006.01)*
***C08L 55/02*** *(2006.01)*

(86) Internationale Anmeldenummer:
**PCT/EP2001/007127**

(87) Internationale Veröffentlichungsnummer:
**WO 2002/000745 (03.01.2002 Gazette 2002/01)**

(54) **KAUTSCHUKHALTIGE STYROLPOLYMERE MIT VERBESSERTER SCHLAGZÄHIGKEIT**
RUBBER-CONTAINING STYRENE POLYMERS WITH IMPROVED IMPACT RESISTANCE
POLYMERES STYROL CONTENANT DU CAOUTCHOUC, A RESISTANCE AUX CHOC AMELIOREE

(84) Benannte Vertragsstaaten:
**AT BE CH CY DE DK ES FI FR GB GR IE IT LI LU MC NL PT SE TR**

(30) Priorität: **28.06.2000 DE 10030618**

(43) Veröffentlichungstag der Anmeldung:
**02.04.2003 Patentblatt 2003/14**

(73) Patentinhaber: **BASF Aktiengesellschaft**
**67056 Ludwigshafen (DE)**

(72) Erfinder:
- **DUIJZINGS, Wil**
**67065 Ludwigshafen (DE)**
- **BARGHOORN, Peter**
**67273 Hockenheim (DE)**
- **BRINKMANN-RENGEL, Susanne**
**55270 Ober-Olm (DE)**

(56) Entgegenhaltungen:
**EP-A- 0 726 280**
**EP-A- 1 002 812**
**DE-A- 19 853 107**
**US-A- 5 212 240**
**US-A- 5 674 940**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft thermoplastische Formmassen enthaltend, bezogen auf die Formmasse,

A) 5 bis 80 Gew.-% mindestens einer Kautschukphase aus einem kautschukelastischen Polymerisat mit einer Glasübergangstemperatur Tg von 0°C oder darunter, und

B) 20 bis 95 Gew.-% mindestens einer Hartphase aus einem Styrolhomo- oder Styrolcopolymeren aus Styrol und/oder α-Methylstyrol mit Methylmethacrylat, N-Phenyl maleinimid, Maleinsäureanhydrid oder Acrylnitril oder Mischungen der genannten Monomeren mit kleiner Polydispersität und einem Polydispersitätsindex PDI

$$PDI = \frac{\text{gewichtsmittleres Molekulargewicht } \overline{M_w}}{\text{zahlenmittleres Molekulargewicht } \overline{M_n}} \leq 2,3.$$

Weiterhin betrifft die Erfindung die Verwendung dieser Formmassen zur Herstellung von Formkörpern, Folien, Fasern und Schäumen, sowie Formkörper, Folien, Fasern und Schäume aus diesen Formmassen. Außerdem betrifft die Erfindung ein Verfahren zur Erhöhung der Schlagzähigkeit von kautschukhaltigen Styrolpolymeren, und die Verwendung von Styrolhomo- oder Styrolcopolymeren mit kleiner Polydispersität zur Erhöhung der Schlagzähigkeit von kautschukhaltigen Styrolpolymeren.

Kautschukhaltige Styrolpolymere aus einer Kautschukphase und einer Hartphase wie etwa ABS (Acrylnitril-Butadien-Styrol), ASA (Acrylnitril-Styrol-Acrylester) und AES (Acrylnitril-(Ethylen-Propylen-Dien-Kautschuk)-Styrol) haben aufgrund ihrer vorteilhaften Eigenschaften zahlreiche Anwendungsgebiete und sind bekannt.

So sind beispielsweise Styrolpolymerisate aus den Offenlegungsschriften EP-A 1002812 und 726280 sowie der Patentschrift US 5,212,240 bekannt, die verbesserte Fließfähigkeiten und Schlagzähigkeiten aufweisen. Die Styrolpolymerisate weisen, wie den Beispielen zu entnehmen ist, einen Polydispersitätsindex im Bereich von ca. 1,6 bis 2,6 auf. Die Polymerisation des Styrols zum Styrolpolymeren erfolgt dabei jeweils in Gegenwart des Kautschuks. Bei höheren Kautschukgehalten ergibt sich das Problem, daß der Kautschuk aufgrund der Phaseninversion nicht mehr gut löslich ist. Dies wiederum wirkt sich auf das Eigenschaftsprofil der aus diesen Kunststoffen hergestellten Formteilen aus.

ABS-Formmassen, die z.B. durch Mischen des Kautschuks mit einem Styrolcopolymeren erhältlich sind, die verbesserte Zähigkeit ohne Verlust an Eigenschaftsniveau wie Verarbeitbarkeit aufweisen sind veröffentlicht (US 5,674,940, DE-A 19853107). Die Styrolcopolymere weisen eine Polydispersität von ≤ 3 (ausgedrückt über die Uneinheitlichkeit Mn/Mw - 1 ≤ 2) auf.

Die Schlagzähigkeit von kautschukhaltigen Styrolpolymeren ist für manche anspruchsvollen Anwendungen weiter verbesserungsfähig. Unter Schlagzähigkeit soll hier die Schlagzähigkeit am ungekerbten Probekörper $a_n$, und die Kerbschlagzähigkeit am gekerbten Probekörper $a_k$, sowie ebenso Schlagzähigkeiten nach den Methoden Charpy, Izod, Impact Falling Dart u.ä., verstanden werden.

Zwar kann man die Schlagzähigkeit von kautschukhaltigen Styrolpolymeren durch verschiedene Maßnahmen erhöhen, etwa durch Zugabe bestimmter Zusatzstoffe, Einstellung bestimmter Teilchengrößen und Teilchengrößenverteilungen der Kautschukphase oder Erhöhung des Kautschukgehalts, jedoch verschlechtern sich durch diese Maßnahmen in vielen Fällen andere Eigenschaften der Formmassen. Beispielsweise vermindern Zusatzstoffe oftmals die Wärmealterungsbeständigkeit der Formmassen. Veränderungen der Kautschuk-Teilchengröße und ihrer Verteilung beeinflussen in vielen Fällen die Verarbeitbarkeit (z.B. die Fließfähigkeit) der Formmasse oder verschlechtern ihre Einfärbbarkeit mit Farbmitteln (höhere Farbmittelmengen erforderlich, dadurch höhere Kosten). Ein höherer Kautschukgehalt verteuert die Formmassen.

Es bestand die Aufgabe, den geschilderten Nachteilen abzuhelfen. Insbesondere sollten Formmassen aus kautschukhaltigen Styrolpolymeren bereitgestellt werden, deren Schlagzähigkeit und zwar unabhängig von der Art der Beanspruchung verbessert (erhöht) ist, wobei diese Verbesserung nicht auf Kosten anderer Eigenschaften der Formmassen, insbesondere der Fließfähigkeit, erzielt werden sollte. D.h. die Schlagzähigkeit sollte gegenüber den bekannten Formmassen verbessert werden und die anderen Eigenschaften auf dem Niveau der bekannten Formmassen gehalten werden. Insbesondere sollte die Verbesserung der Schlagzähigkeit bei unverändert guter Fließfähigkeit der Formmasse erzielt werden.

Demgemäß wurden die eingangs definierten Formmassen gefunden. Außerdem wurden die Verwendung dieser Formmassen zur Herstellung von Formkörpern, Folien, Fasern und Schäumen, sowie Formkörper, Folien, Fasern und Schäume aus diesen Formmassen gefunden.

Als Komponente A) enthalten die erfindungsgemäßen Formmassen 5 bis 80, bevorzugt 10 bis 70 und besonders bevorzugt 15 bis 60 Gew.-% mindestens einer Kautschukphase A) aus einem kautschukelastischen Polymerisat mit

einer Glasübergangstemperatur Tg von 0˚C oder darunter (Tg bestimmt mittels Differential Scanning Calorimetry (DSC) nach DIN 53765).

Als Kautschukphase A) sind prinzipiell alle kautschukelastischen Polymerisate mit Tg ≤ 0˚C geeignet, insbesondere solche, die als Kautschuk

- einen Dienkautschuk auf Basis von Dienen, wie z.B. Butadien oder Isopren,oder Mischungen dieser Monomeren
- einen Alkylacrylatkautschuk auf Basis von Alkylestern der Acrylsäure, wie n-Butylacrylat oder 2-Ethylhexylacrylat, oder Mischungen dieser Monomeren,
- einen EPDM-Kautschuk auf Basis von Ethylen, Propylen und einem Dien oder Mischungen unterschiedlicher Diene,
- einen Siliconkautschuk auf Basis von Polyorganosiloxanen,

oder Mischungen dieser Kautschuke enthalten.

Bevorzugt ist die Kautschukphase A) ein Pfropfpolymerisat aus einer Grundstufe und einer Pfropfstufe.

Bevorzugte Pfropfpolymerisate A enthalten, bezogen auf A),

a1) 30 bis 95, bevorzugt 40 bis 90 und besonders bevorzugt 40 bis 85 Gew.-% einer kautschukelastischen Grundstufe aus, bezogen auf a1)

a11) 50 bis 100, bevorzugt 60 bis 100 und besonders bevorzugt 70 bis 100 Gew.-% eines ($C_1$-$C_{10}$-Alkyl)esters der Acrylsäure,

a12) 0 bis 10, bevorzugt 0 bis 5 und besonders bevorzugt 0 bis 2 Gew.-% eines polyfunktionellen, vernetzenden Monomeren,

a13) 0 bis 40, bevorzugt 0 bis 30 und besonders bevorzugt 0 bis 20 Gew.-% von einem oder mehreren weiteren monoethylenisch ungesättigten Monomeren,

oder aus

a11*) 50 bis 100, bevorzugt 60 bis 100 und besonders bevorzugt 65 bis 100 Gew.-% eines Diens mit konjugierten Doppelbindungen,

a12*) 0 bis 50, bevorzugt 0 bis 40 und besonders bevorzugt 0 bis 35 Gew.-% von einem oder mehreren monoethylenisch ungesättigten Monomeren,

oder aus

a11**) 50 bis 100, bevorzugt 60 bis 100 und besonders bevorzugt 65 bis 100 Gew.-% einer Mischung aus Ethylen, Propylen und einem Dien,

a12**) 0 bis 50, bevorzugt 0 bis 40 und besonders bevorzugt 0 bis 35 Gew.-% von einem oder mehreren weiteren monoethylenisch ungesättigten Monomeren, und

a2) 5 bis 70, bevorzugt 10 bis 60 und besonders bevorzugt 15 bis 60 Gew.-% einer Pfropfstufe aus, bezogen auf a2),

a21) 50 bis 100, bevorzugt 60 bis 100 und besonders bevorzugt 65 bis 100 Gew.-% einer Styrolverbindung der allgemeinen Formel I

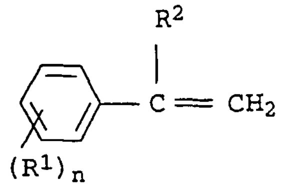 (I)

mit $R^1$, $R^2$: unabhängig voneinander H oder $C_1$-$C_8$-Alkyl n: 0, 1, 2 oder 3,

a22) 0 bis 40, bevorzugt 0 bis 38 und besonders bevorzugt 0 bis 35 Gew.-% Acrylnitril oder Methacrylnitril oder deren Mischungen,

a23) 0 bis 40, bevorzugt 0 bis 30 und besonders bevorzugt 0 bis 20 Gew.-% von einem oder mehreren weiteren monoethylenisch ungesättigten Monomeren.

Als ($C_1$-$C_{10}$-Alkyl)ester der Acrylsäure, Komponente a11), eignen sich vor allem Ethylacrylat, 2-Ethylhexylacrylat und n-Butylacrylat. Bevorzugt sind 2-Ethylhexylacrylat und n-Butylacrylat, ganz besonders bevorzugt ist n-Butylacrylat. Es können auch Mischungen verschiedener Alkylacrylate verwendet werden, die sich in ihrem Alkylrest unterscheiden.
Vernetzende Monomere a12) sind bi- oder polyfunktionelle Comonomere mit mindestens zwei olefinischen Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols (siehe DE-OS 12 60 135), der unter dem Namen Dihydrodicyclopentadienylacrylat bekannt ist, sowie die Allylester der Acrylsäure und der Methacrylsäure.
Vernetzende Monomere a12) können in den Formmassen je nach Art der herzustellenden Formmassen, insbesondere je nach den gewünschten Eigenschaften der Formmassen, enthalten sein oder nicht.
Falls vernetzende Monomere a12) in den Formmassen enthalten sind, so betragen die Mengen 0,01 bis 10, bevorzugt 0,3 bis 8 und besonders bevorzugt 1 bis 5 Gew.-%, bezogen auf a1).
Bei den weiteren monoethylenisch ungesättigten Monomeren a13), die auf Kosten der Monomeren a11) und a12) im Pfropfkern a1) enthalten sein können, handelt es sich beispielsweise um:

vinylaromatische Monomere wie Styrol, Styrolderivate der obigen allgemeinen Formel I;

Acrylnitril, Methacrylnitril;

$C_1$- bis $C_4$-Alkylester der Methacrylsäure wie Methylmethacrylat, weiterhin auch die Glycidylester, Glycidylacrylat und -methacrylat;

N-substituierte Maleinimide wie N-Methyl-, N-Phenyl- und N-Cyclohexylmaleinimid;

Acrylsäure, Methacrylsäure, weiterhin Dicarbonsäuren wie Maleinsäure, Fumarsäure und Itaconsäure sowie deren Anhydride wie Maleinsäureanhydrid;

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;

aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;

ungesättigte Ether wie Vinylmethylether,

sowie Mischungen dieser Monomeren.
Bevorzugte Monomeren a13) sind Styrol, Acrylnitril, Methylmethacrylat, Glycidylacrylat und -methacrylat, Acrylamid und Methacrylamid.
Anstelle der Grundstufen-Monomere a11) bis a13) kann die Grundstufe a1) auch aus den Monomeren a11*) und a12*) aufgebaut sein.
Als Diene mit konjugierten Doppelbindungen, a11*), kommen Butadien, Isopren, Norbornen, und deren halogensubstituierte Derivate, etwa Chloropren, in Betracht. Bevorzugt sind Butadien und Isopren, insbesondere Butadien.
Als weitere monoethylenisch ungesättigte Monomere a12*) können die Monomere mitverwendet werden, wie sie für die Monomeren a13) bereits genannt wurden.
Bevorzugte Monomeren a12*) sind Styrol, Acrylnitril, Methylmethacrylat, Glycidylacrylat und -methacrylat, Acrylamid und Methacrylamid.
Der Pfropfkern a1) kann auch aus einer Mischung der Monomeren a11) bis a13), und a11*) bis a12*), aufgebaut

sein.

Anstelle der Grundstufen-Monomere a11) bis a13) bzw. a11*) und a12*) kann die Grundstufe a1) auch aus den Monomeren a11**) und a12**) aufgebaut sein. Als Dien in der Monomermischung a11**), welches in Mischung mit Ethylen und Propylen verwendet wird, sind insbesondere Ethylidennorbornen und Dicyclopentadien geeignet.

Als weitere monoethylenisch ungesättigte Monomere a12**) können die für a13) genannten Monomeren mitverwendet werden.

Der Pfropfkern kann auch aus einer Mischung der Monomeren a11) bis a13) und a11**) bis a12**), oder aus einer Mischung der Monomeren a11*) bis a12*) und a11**) bis a12**), oder aus einer Mischung der Monomeren a11) bis a13), a11*) bis a12*) und a11**) bis a12**), aufgebaut sein.

Enthält der Pfropfkern die Monomeren a11) bis a13), so entstehen nach Abmischung mit einer Hartphase B) aus Styrol und Acrylnitril (SAN), sogenannte ASA-Formmassen (Acrylnitril-Styrol-Acrylester). Enthält der Pfropfkern die Monomeren a11*) bis a12*), so entstehen nach Abmischung mit einer Hartphase B) aus Styrol und Acrylnitril (SAN) Formmassen vom ABS-Typ (Acrylnitril-Butadien-Styrol). Enthält der Pfropfkern die Monomeren a11**) bis a12**), so entstehen nach Abmischung mit einer Hartphase B) aus Styrol und Acrylnitril (SAN) Formmassen vom AES-Typ (Acrylnitril-EPDM-Styrol). In einer bevorzugten Ausführungsform handelt es sich demnach bei den Polymerisaten A um ASA-Pfropfpolymerisate oder um ABS-Pfropfpolymerisate oder um AES-Pfropfpolymerisate, oder um Mischtypen aus ASA, ABS und AES-Pfropfpolymerisaten.

Bezüglich der Monomeren a21) bzw. a23) sei auf die Ausführungen zu den Komponenten b1) bzw. b3) weiter unten verwiesen. Demnach kann die Pfropfschale a2) auf Kosten der Monomere a21) weitere Monomere a22), oder a23), oder deren Mischungen, enthalten. Bevorzugt ist die Pfropfschale a2) aufgebaut aus Polymerisaten, wie sie weiter unten als bevorzugte Ausführungsformen B/1 bis B/4 der Komponente B) genannt werden.

Die Herstellung der Pfropfstufe a2) kann unter den gleichen Bedingungen wie die Herstellung der Grundstufe a1) erfolgen, wobei man die Pfropfstufe a2) in einem oder mehreren Verfahrenschritten herstellen kann. Dabei können die Monomeren a21), a22) und a23) einzeln oder in Mischung miteinander zugefügt werden. Das Monomerenverhältnis der Mischung kann zeitlich konstant oder ein Gradient sein. Auch Kombinationen dieser Verfahrensweisen sind möglich.

Beispielsweise kann man zunächst Styrol alleine, und danach eine Mischung aus Styrol und Acrylnitril, auf die Grundstufe a1) polymerisieren.

Die Bruttozusammensetzung bleibt von den genannten Ausgestaltungen des Verfahrens unberührt.

Weiterhin eignen sich auch Pfropfpolymerisate mit mehreren "weichen" und "harten" Stufen, z.B. des Aufbaus a1)-a2)-a1)-a2) oder a2)-a1)-a2), vor allem im Falle größerer Teilchen.

Soweit bei der Pfropfung nicht gepfropfte Polymere aus den Monomeren a2) entstehen, werden diese Mengen, die in der Regel unter 10 Gew.-% von a2) liegen, der Masse der Komponente A zugeordnet.

Nach einer der bevorzugten Ausführungsformen kommen Pfropfcopolymerisate A in Betracht deren Styrolacrylnitrilanteil eine breite Polydispersität aufweist, beispielsweise im Bereich von > 2,3 bis 5 liegt.

Die Herstellung der Pfropfpolymerisate A kann auf verschiedene Weise durchgeführt werden, insbesondere in Emulsion, in Mikroemulsion, in Miniemulsion, in Suspension, in Mikrosuspension, in Minisuspension, als Fällungspolymerisation, in Masse oder in Lösung, kontinuierlich oder diskontinuierlich.

Bei der Emulsionspolymerisation und ihren Varianten (Mikroemulsion, Miniemulsion) werden die Monomeren in Wasser emulgiert, wozu Emulgatoren mitverwendet werden. Die für die Stabilisierung der Emulsion geeigneten Emulgatoren sind seifenartige Hilfsstoffe, welche die Monomerentröpfchen umhüllen und auf diese Weise vor dem Zusammenlaufen schützen.

Als Emulgatoren eignen sich die dem Fachmann bekannten anionischen, kationischen und neutralen (nichtionogenen) Emulgatoren. Anionische Emulgatoren sind z.B. Alkalimetallsalze von höheren Fettsäuren mit 10 bis 30 C-Atomen wie Palmitin-, Stearin- und Ölsäure, Alkalimetallsalze von Sulfonsäuren mit z.B. 10 bis 16 C-Atomen, insbesondere Natriumsalze von Alkyl- oder Alkylarylsulfonsäuren, Alkalimetallsalze von Halbestern der Phthalsäure, und Alkalimetallsalze von Harzsäuren wie Abietinsäure. Kationische Emulgatoren sind z.B. Salze langkettiger, insbesondere ungesättigter Amine mit 12-18 C-Atomen, oder quaternäre Ammoniumverbindungen mit längerkettigen Olefin- oder Paraffinresten (also Salze quaternisierter Fettamine). Neutrale Emulgatoren sind z.B. ethoxylierte Fettalkohole, ethoxylierte Fettsäuren oder ethoxylierte Phenole und Fettsäureester von mehrwertigen Alkoholen wie Pentaerythrit oder Sorbit.

Für die Emulsionspolymerisation werden bevorzugt Initiatoren verwendet, die in dem Monomeren schlecht löslich, in Wasser dagegen gut löslich sind. Es werden daher bevorzugt Peroxosulfate wie Kalium-, Natrium- oder Ammoniumperoxodisulfat verwendet, oder auch Redox-Systeme, insbesondere solche auf Basis von Hydroperoxiden wie Cumolhydroperoxid, Dicumylperoxid, Benzoylperoxid oder Lauorylperoxid.

Bei der Verwendung von Redox-Systemen werden wasserlösliche Metallverbindungen mitverwendet, deren Metallkationen leicht die Oxidationsstufe wechseln können, z.B. Eisensulfathydrat. Üblicherweise werden auch Komplexbildner wie Natriumpyrophosphat oder Ethylendiamintetraessigsäure mitverwendet, die ein Ausfallen schwerlöslicher Metallverbindungen bei der Polymerisation verhindern. Als Reduktionsmittel bei Redox-Systemen werden in der Regel organische Verbindungen wie Dextrose, Glucose und/oder Sulfoxylate verwendet.

Als weitere Zusatzstoffe können bei der Polymerisation Puffersubstanzen wie $Na_2HPO_4$ / $NaH_2PO_4$ oder Na-citrat/Citronensäure verwendet werden, um einen im wesentlichen konstant bleibenden pH-Wert einzustellen. Weiterhin können Molekulargewichtsregler, etwa Mercaptane wie t-Dodecylmercaptan, oder Ethylhexylthioglycolat mitverwendet werden. Diese weiteren Zusatzstoffe können, ebenso wie die Emulgatoren und Initiatoren bzw. Redoxsysteme, kontinuierlich oder diskontinuierlich am Anfang und/oder während der Herstellung der Emulsion und/oder während der Polymerisation, zugefügt werden.

Die genauen Polymerisationsbedingungen, insbesondere Art, Menge und Dosierung des Emulgators und der anderen Polymerisationshilfsstoffe werden bevorzugt so gewählt, daß der erhaltene Latex des Pfropfpolymerisates eine mittlere Teilchengröße, definiert durch den $d_{50}$-Wert der Teilchengrößenverteilung, von 50 bis 1000, bevorzugt 100 bis 600 und besonders bevorzugt 150 bis 450 nm aufweist.

Die Teilchengrößenverteilung kann z.B. monomodal oder bimodal sein. Bevorzugt wird eine bimodale Teilchengrößenverteilung durch eine (teilweise) Agglomeration der Polymerteilchen erzielt. Dazu kann beispielsweise wie folgt vorgegangen werden: Man polymerisiert die Monomeren a1), welche den Kern aufbauen, bis zu einem Umsatz von üblicherweise mindestens 90, bevorzugt größer 95 %, bezogen auf die eingesetzten Monomeren. Der erhaltene Kautschuklatex hat in der Regel eine mittlere Teilchengröße $d_{50}$ von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymerisates (siehe DE-A 2427960). Vorzugsweise werden Dispersionen von Copolymerisaten von ($C_1$-$C_4$-Alkyl)estern der Acrylsäure, vorzugsweise von Ethylacrylat, mit 0,1 bis 20 Gew.-% polare Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96 % Ethylacrylat und 4 % Methacrylamid. Die Konzentration der Acrylesterpolymerisate in der zur Agglomeration verwendeten Dispersion soll im allgemeinen zwischen 3 und 40, bevorzugt 5 bis 20 Gew.-% liegen.

Unter den genannten Bedingungen wird nur ein Teil der Kautschukteilchen agglomeriert, so daß eine bimodale Verteilung entsteht. Dabei liegen gemäß einer ersten Ausführungsform nach der Agglomeration im allgemeinen mehr als 50, vorzugsweise zwischen 75 und 95 % der Teilchen (Zahlen-Verteilung) im nicht agglomerierten Zustand vor.

Gemäß einer zweiten Ausführungsform wird die Agglomeration derart ausgeführt, daß nach der Agglomeration die Polymerteilchen eine polymodale Teilchengrößenverteilung aufweisen, in der in jedem Teilchengrößenintervall der Breite 50 nm weniger als 40 Gew.-%, vorzugsweise weniger als 37,5 Gew.-%, bevorzugter weniger als 35 Gew.-%, besonders bevorzugt weniger als 32,5 Gew.-%, insbesondere weniger als 30 Gew.-% der Teilchen vorliegen. Der mittlere Teilchendurchmesser bezieht sich dabei, sofern nicht anders angegeben, auf das Gewicht. Insbesondere handelt es sich um den $d_{50}$-Wert der integralen Massenverteilung, die mit Hilfe einer Ultrazentrifuge bestimmt wird. Die Teilchengrößenverteilung wird ebenfalls vorzugsweise mit Hilfe einer Ultrazentrifuge bestimmt, wie es weiter unten näher erläutert ist. Bei der Bestimmung der Teilchengrößenverteilung wird in der Regel das Integral über die Masse bzw. das Gewicht aufgetragen in Abhängigkeit der Teilchengröße. Wählt man sich nun ein beliebiges Intervall der Teilchengröße mit einer Breite von 50 nm, so beträgt nach dieser Ausführungsform der Gewichts- oder Massenzuwachs im Integral weniger als 40 Gew.-%, vorzugsweise weniger als 37,5 Gew.-%, bevorzugter weniger als 35 Gew.-%, besonders bevorzugt weniger als 32,5 Gew.-%, insbesondere weniger als 30 Gew.-%. Üblicherweise liegen die Teilchengrößen in einem agglomerierten Latex im Bereich von bis zu 1.000 nm. In der Regel befindet sich daher das Intervall von 50 nm innerhalb dieses Teilchengrößenbereichs von bis zu 1.000 nm. Für ein beliebig positioniertes Teilchengrößenfenster der Breite 50 nm ist nach dieser zweiten Ausführungsform die vorstehende Bedingung zu erfüllen.

Vorzugsweise ist bei dieser Ausführungsform im teilchenförmigen Emulsionspolymerisat das Verhältnis $D_w/D_n$ des Gewichtsmittels $d_{50}$ zum Zahlenmittel $d_{50}$ der Teilchengröße < 5, besonders bevorzugt < 4, insbesondere < 3. Vorzugsweise ist das Gewichtsintegral, aufgetragen gegen die Teilchengröße, eine monoton steigende Funktion. Dies bedeutet, daß im Verlauf der Funktion von 0 bis 100 Gew.-% kein Plateau vorliegt, sondern eine stetig ansteigende Kurve vorliegt.

Bei dieser zweiten Ausführungsform liegt die Teilchengröße des agglomerierenden Acrylesterpolymerisat-Latex vorzugsweise etwa im Bereich der Teilchengröße des zu agglomerierenden Latex. Das Verhältnis der mittleren Teilchengröße des Acrylesterlatex zur mittleren Teilchengröße des Substratlatex beträgt bei dieser zweiten Ausführungsform vorzugsweise 0,2 bis 2, besonders bevorzugt 0,5 bis 1,5.

Die Agglomeration wird bei dieser Ausführungsform vorzugsweise bei einer Temperatur von 20 bis 120°C, besonders bevorzugt 30 bis 100°C durchgeführt. Die Zugabe des Agglomerierlatex erfolgt vorzugsweise derart, daß pro Minute 1 bis 1/100 der Gesamtmenge des zuzufügenden Agglomerierlatex eingetragen werden. Die Agglomerierzeit beträgt vorzugsweise 1 Minute bis 2 Stunden, besonders bevorzugt 10 bis 60 Minuten.

Die Menge des Agglomerierlatex, bezogen auf den zu agglomerierenden Latex, beträgt bei dieser zweiten Ausführungsform vorzugsweise 0,1 bis 20, bevorzugt 0,5 bis 10, insbesondere 1 bis 5 Gew.-%, bezogen auf Feststoffe.

Man nimmt die Emulsionspolymerisationsreaktion in der Regel unter langsamem oder mäßigem Rühren vor.

Die Mikroemulsionspolymerisation unterscheidet sich von der normalen Emulsionspolymerisation vor allem

dadurch, daß aus den Monomeren, Wasser und den Emulgatoren eine Emulsion bereitet wird, indem man hohe Scherkräfte einwirken läßt. Dazu verwendet man Homogenisatoren, die dem Fachmann bekannt sind, z.B. Labordissolver Dispermat, Fa. VMA-Getzmann, Reichshof, DE, Ultra-Turrax, Fa. Janke und Kunkel, Staufen, DE, Geräte mit einem Rotor-Stator-System, etwa Dispax, Fa. Janke und Kunkel, Staufen, DE. Üblicherweise betreibt man diese Geräte bei Drehzahlen von 1000 bis 25 000 $min^{-1}$, bevorzugt 2000 bis 25 000 $min^{-1}$.

Die Miniemulsionspolymerisation unterscheidet sich von der normalen Emulsionspolymerisation und der Mikroemulsionspolymerisation vor allem dadurch, daß die Partikelgröße in der Regel zwischen 30-500 nm beträgt (also zwischen den typischen Partikelgrößen der Emulsions- und der Mikroemulsionspolymerisation liegt), und die Partikel üblicherweise durch eine Kombination von ionischen Emulgatoren und Co-Emulgatoren gegen das Zusammenlaufen stabilisiert werden. Bei der Miniemulsion wird das Gemisch aus Monomeren, Wasser, Emulgatoren und Co-Emulgatoren hohen Scherkräften ausgesetzt, wodurch die Komponenten innig vermischt werden. Anschließend wird polymerisiert. Die hohen Scherkräfte können beispielsweise durch Ultraschall oder durch ein Microfluidizer-Gerät erzeugt werden. Als Co-Emulgatoren werden solche Verbindungen gewählt, die bewirken, daß die Tröpfchen, die vor dem Starten der Polymerisation gebildet werden, sehr klein aber nicht thermodynamisch stabil sind (siehe Gilbert, "Emulsion Polymerisation, A Mechanistic Approach", Academic Press, London San Diego 1995, S. 12-14). Als Co-Emulgatoren werden üblicherweise langkettige Alkane wie Hexadecan oder langkettige Alkohole wie Hexadecanol (Cetylalkohol) oder Dodecanol eingesetzt.

Bei der Suspensionspolymerisation und ihren Varianten (Mikrosuspension, Minisuspension) werden die Monomeren in Wasser suspendiert, wozu Schutzkolloide mitverwendet werden. Als Schutzkolloide eignen sich Cellulosederivate wie Carboxymethylcellulose und Hydroxymethylcellulose, Poly-N-Vinylpyrrolidon, Polyvinylalkohol und Polyethylenoxid, anionische Polymere wie Polyacrylsäure und deren Copolymere und kationische wie Poly-N-vinylimidazol. Die Menge dieser Schutzkolloide beträgt vorzugsweise 0,1 bis 5 Gew.-%, bezogen auf die Gesamtmasse der Emulsion. Bevorzugt werden ein oder mehrere Polyvinylalkohole als Schutzkolloid verwendet, insbesondere solche mit einem Hydrolysegrad unter 96 mol-%.

Man kann zusätzlich zu den Schutzkolloiden kolloidale Kieselsäure in Konzentration von in der Regel 0,2 bis 5 Gew.-%, bezogen auf die Menge der Dispersion, mitverwenden.

Für die Suspensionspolymerisation sind Initiatoren mit einer Halbwertzeit von einer Stunde, wenn die Temperatur bei 40 bis 150°C liegt, und die in den Monomeren merklich löslich, in Wasser dagegen schlecht löslich sind, bevorzugt. Es werden daher organische Peroxide, organische Hydroperoxide, Azoverbindungen und/oder Verbindungen mit C-C-Einfachbindungen als Initiatoren RI verwendet. Ebenso werden als radikalische Polymerisationsinitiatoren Monomere verwendet, die bei erhöhter Temperatur spontan polymerisieren. Es können auch Mischungen der genannten Initiatoren RI verwendet werden. Bei den Peroxiden sind diejenigen mit hydrophoben Eigenschaften bevorzugt. Ganz besonders bevorzugt sind Dilauorylperoxid und Dibenzoylperoxid. Als Azoverbindungen werden 2,2'Azobis(2-methylbutyronitril) und 2,2'-Azobis(iso-butyronitril) bevorzugt. Als Verbindungen mit labilen C-C-Bindungen verwendet man bevorzugt 3,4-Dimethyl-3,4-diphenylhexan und 2,3-Dimethyl-2,3-diphenylbutan.

Man nimmt die Polymerisationsreaktion in der Regel unter langsamem oder mäßigem Rühren vor.

Die Mikrosuspensionspolymerisation unterscheidet sich von der normalen Suspensionspolymerisation vor allem dadurch, daß durch Einwirkung hoher Scherkräfte eine feinteilige Suspension bereitet wird. Einzelheiten wurden bereits bei der Mikroemulsionspolymerisation beschrieben.

Die Minisuspensionspolymerisation unterscheidet sich von der normalen Suspensionspolymerisation und der Mikrosuspensionspolymerisation vor allem dadurch, daß die Partikelgrößen in der Regel zwischen denen der Suspensions- und der Mikrosuspensionspolymerisation liegen.

Bei der Fällungspolymerisation sind die eingesetzten Monomere in der kontinuierlichen Phase (z.B. Lösungsmittel oder Lösungsmittelgemisch) löslich, die entstehenden Polymere sind jedoch nicht oder nur begrenzt löslich und fallen daher während der Polymerisation aus. Auch Substanzpolymerisationen, bei denen das entstehende Polymer im Monomer unlöslich ist und daher ausfällt, sind möglich. Je nach Reaktionsmedium sind die bei der Emulsions- bzw. Suspensionspolymerisation beschriebenen Initiatoren möglich. Es kann auch thermisch initiiert werden.

Bei der Massepolymerisation werden die Monomeren ohne Zugabe eines Reaktionsmediums unter Verwendung der genannten monomerlöslichen Initiatoren polymerisiert, d.h. die Monomeren sind das Reaktionsmedium. Es kann auch thermisch initiiert werden.

Die Lösungspolymerisation unterscheidet sich von der Massepolymerisation vor allem dadurch, daß ein organisches Lösungsmittel wie Cyclohexan, Ethylbenzol oder Dimethylsulfoxid zur Verdünnung der Monomeren mitverwendet wird. Es können auch die genanten Initiatoren eingesetzt werden, oder es kann thermisch initiiert werden.

Das verfahren zur Herstellung der Pfropfpolymerisate kann auch als kombiniertes Verfahren ausgeführt werden, bei dem mindestens zwei der zuvor beschriebenen Polymerisationsverfahren miteinander kombiniert werden. Hier sind insbesondere Masse/Lösung, Lösung/Fällung, Masse/Suspension und Masse/Emulsion zu nennen, wobei mit dem erstgenannten begonnen und mit dem letztgenannten beendet wird.

Als Komponente B) die getrennt von der Komponente A, d.h. nicht in Gegenwart von A hergestellt wird, enthalten

die erfindungsgemäßen Formmassen 20 bis 95, bevorzugt 30 bis 90 und besonders bevorzugt 40 bis 85 Gew.-% mindestens einer Hartphase aus einem Styrolhomo- oder Styrolcopolymeren aus Styrol und/oder α-Methylstyrol mit Methylmethacrylat, N- Phenylmaleinimid, Maleinsäurenhybrid oder Acrylnitril oder Mischungen der genannten Monomeren mit kleiner Dispersität, ausgedrückt als Polydispersitätsindex PDI = gewichtsmittleres Molekulargewicht $\bar{M}_w$/ zahlenmittleres Molekulargewicht $\bar{M}_n$, der erfindungsgemäß 2,3 oder kleiner ist. Dies entspricht einer Uneinheitlichkeit von 1,3 oder kleiner.

Die Molmassen $\bar{M}_w$ und $\bar{M}_n$ können beispielsweise durch Gelpermeationschromatographie (GPC) bestimmt werden, wobei üblicherweise gegen Polystyrolstandards kalibriert wird. Als Eluent wird oft Tetrahydrofuran, oder eine Mischung aus Tetrahydrofuran und Säuren wie Essigsäure, verwendet. Einzelheiten zur GPC findet der Fachmann in M. Lechner et al., Makromolekulare Chemie, 2. Aufl., Birkhäuser Verlag, Basel 1996, S. 295-299. $\bar{M}_w$ und $\bar{M}_n$ können auch durch Ultrazentrifugen oder Lichtstreuung in bekannter Weise bestimmt werden. Bevorzugt werden die Molmassen mittels GPC gegen Polystyrolstandard (Molgewichtsbereich 500000 bis 1000000, Styroldivinylbenzolgelsäule und Tetrahydrofuran als Eluent bestimmt.

Bevorzugt hat die Hartphase B) eine Glasübergangstemperatur Tg (bestimmt wie für die Kautschukphase A) beschrieben) von 50°C oder darüber. B) ist demnach ein hartes Polymeres. Bevorzugt ist B) kautschukfrei.

Bevorzugte Hartphasen B) sind Copolymere aus Styrol und/oder α-Methylstyrol mit Methylmethacrylat und oder Acrylnitril.

Als Beispiele für bevorzugte Hartphasen B) seien genannt:

B/1: Polystyrol
B/2: Copolymeres aus Styrol und Acrylnitril,
B/3: Copolymeres aus α-Methylstyrol und Acrylnitril,
B/4: Copolymeres aus Styrol und Methylmethacrylat.

Nach einer der bevorzugten Ausführungsformen enthalten die erfindungsgemäßen Formmassen Komponenten A, deren Verhältnis von Styrolverbindung zu Comonomeren sich vom Verhältnis von Styrolverbindung zu Comonomer in der Komponente B unterscheidet.

Besonders bevorzugt beträgt der Anteil an Styrol oder α-Methylstyrol, oder der Anteil der Summe aus Styrol und α-Methylstyrol, mindestens 40 Gew.-%, bezogen auf die Komponente B). Die obige Hartphase B/2 ist besonders bevorzugt.

Enthält die Hartphase B) bevorzugt Styrol und Acrylnitril, so entstehen die bekannten handelsüblichen SAN-Copolymeren. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40.000 bis 2.000.000 (Gewichtsmittel).

Die Hartphase B) kann man in an sich bekannter Weise, z.B. durch Substanz-, Lösung- Suspensions-, Fällungs- oder Emulsionspolymerisation erhalten. Einzelheiten dieser Verfahren wurden bereits weiter oben bei der Herstellung der Kautschukphase A) beschrieben, und werden außerdem z.B. im Kunststoffhandbuch, Hrg. Vieweg und Daumiller, Carl-Hanser-Verlag München, Bd. 1 (1973), S. 37 bis 42 und Bd. 5 (1969), S. 118 bis 130, sowie in Ullmanns Encyklopädie der technischen Chemie, 4. Aufl., Verlag Chemie Weinheim, Bd. 19, S. 107 bis 158 "Polymerisationstechnik", beschrieben.

Üblicherweise verwendet man zum Starten der Polymerisation radikalische Polymerisationsinitiatoren, wie sie weiter oben bei Komponente A) für die Emulsions- und Suspensionspolymerisation bereits genannt wurden. Jedoch ist es auch möglich, die Polymerisation der Monomeren, welche die Hartphase B) aufbauen, thermisch zu starten. Diese thermische Initiierung der Polymerisation von Styrolhomo- oder -copolymeren ist bekannt.

Bei der Polymerisation der Monomeren zur Hartphase B) sind die Polymerisationsbedingungen in an sich bekannter Weise derart einzustellen, daß der Polydispersitätsindex PDI der Hartphase B) $\leq 2{,}3$ ist (entspricht einer Uneinheitlichkeit von 1,3 oder weniger).

In einer bevorzugten Ausführungsform ist der PDI der Hartphase B) 2,0 oder kleiner, was einer Uneinheitlichkeit von 1,0 oder darunter entspricht.

In einer anderen bevorzugten Ausführungsform wird die Hartphase B) nach dem Verfahren der kontrollierten radikalischen Polymerisation (KRP) hergestellt. Die KRP ermöglicht u.a. die Herstellung von Polymeren mit besonders geringer Polydispersität, also besonders kleinem PDI. Insbesondere ermöglicht die KRP, eine Hartphase B) mit einem PDI $\leq 2{,}0$ herzustellen. Jedoch lassen sich solche "engverteilten" Hartphasen B) mit PDI $\leq 2{,}0$ auch mit den genannten anderen Polymerisationsverfahren herstellen, sofern die Polymerisationsbedingungen in an sich bekannter Weise entsprechend eingestellt werden.

Die KRP wird nachfolgend näher beschrieben. Der nachfolgende Stand der Technik wird nicht als nächstliegend angesehen. Er soll lediglich die KRP genauer erläutern.

Bei der KRP werden die Monomeren in Gegenwart eines kontrolliert radikalisch polymerisierenden Systems polymerisiert.

Aus TRIPS Vol. 4, No. 6, June 1996, S. 183 ff, US-A 5,322,912, WO 96/24620, US-A-4,581,429, US-A 5,412,047, EP-A 135 280 sowie aus DE-A 19602539 ist bekannt, daß die Durchführung von radikalisch initiierten Polymerisationen bei oberhalb 100˚C liegenden Temperaturen im Beisein eines stabilen (im wesentlichen nicht initiierend wirkenden) N-Oxyl-Radikals eine gewisse Kontrolle der radikalisch initiierten Polymerisation ermöglicht.

Der zugrunde liegende Wirkmechanismus liegt vermutlich darin begründet, daß die stabilen N-Oxyl-Radikale reaktive radikalische Enden einer wachsenden Polymerisatkette bei erhöhten Temperaturen nicht irreversibel terminieren, sondern lediglich vorübergehend blockieren. Daraus resultiert eine Verringerung der stationären Konzentration wachsender freier radikalischer Polymerisatkettenenden, was die Möglichkeit für einen irreversiblen Abbruch des Kettenwachstums durch Kombination zweier wachsender Polymerisatkettenenden verringert. Dies führt im Mittel zu mit dem Polymerisationsumsatz (im Idealfall linear) wachsenden Polymerisatketten. Letztes bedingt ein mit dem Polymerisationsumsatz (im Idealfall linear) wachsendes mittleres Molekulargewicht des gebildeten Polymerisats mit vergleichsweise engen Molekulargewichtsverteilungen.

Gemäß US-A 5,322,912, Spalte 10, Zeile 65 ff kommt als Reaktionsmedium für eine solche kontrollierte radikalisch initiierte Polymerisation auch eine Emulsion in Betracht. Das gleiche gilt für die DE-A 19602539. Die US-A 5,412,047 empfiehlt in Spalte 18, Zeilen 54 ff für den Fall, daß die radikalisch initiierte Polymerisation in einem mehrphasigen System erfolgt, wie es bei der radikalisch initiierten wäßrigen Emulsionspolymerisation der Fall ist, stabile N-Oxyl-Radikale zu verwenden, die in Wasser eine besonders geringe Löslichkeit aufweisen.

US-A 4,581,429 offenbart die Herstellung von kurzkettigen Homo-und Copolymeren (Oligomeren) mit weniger als 200 Monomereinheiten durch kontrollierte radikalische Polymerisation. Es werden einige Oligomere mit Blockaufbau beschrieben, deren Molmassen $\bar{M}_n$ jedoch unter 11000 [g/mol] liegen.

In der WO 94/11412 wird ein Polymerisationsverfahren zur Herstellung eines thermoplastischen Harzes beschrieben, wobei eine Mischung aus einem Radikalstarter, einem stabilen freien Radikal und zumindest einem polymerisierbares Monomeren erhitzt wird. Es werden Polymere mit enger Polydispersität erhalten. Als stabiles freies Radikal werden TEMPO (2,2,6,6-Tetramethyl-1-piperidinyloxy) und PROXY (2,2,5,5-Tetramethyl-1-pyrrolidinyloxy) und deren Derivate vorgeschlagen.

Weitere Verfahren zur kontrollierten radikalischen Polymerisation, d. h. zur radikalischen Polymerisation in Gegenwart stabiler freier Radikale, sind in den EP-A-0 735 052, US-A-5,322,912, US-A-5,412,047 und GB 1,124,009 beschrieben.

In der DE-A 197 38 081 wird ein Verfahren zur Herstellung von partikelförmigen Polymerisaten durch kontrollierte radikalische Polymerisation beschrieben. Die DE-A 198 03 098 offenbart ein Verfahren zur Herstellung von Polymerisatpartikeln mit großem Durchmesser durch kontrollierte radikalische Polymerisation. Die ältere, nicht vorveröffentlichte Anmeldung DE-Az. 10016651.2 ist ein älteres Recht nach Art. 54(3) EPÜ und offenbart ein Verfahren zur Herstellung von Polymeren mit enger Molekulargewichtsverteilung, bei dem eine thiolgruppenhaltige Verbindung mit verwendet wird.

Unter "kontrolliert radikalisch polymerisierendes System", das bei der Polymerisation der Monomeren in dieser bevorzugten Ausführungsform mitverwendet wird, soll eine chemische Verbindung oder mehrere chemische Verbindungen verstanden werden, die bewirken, daß die Polymerisation nach dem Prinzip der kontrollierten radikalischen Polymerisation abläuft. "System" bedeutet hier also eine Einzelverbindung oder die Gesamtheit von zusammenwirkenden Verbindungen.

Die KRP kann mit verschiedenen Methoden durchgeführt werden. Für jede Methode wird ein verschiedenes kontrolliert radikalisch polymerisierendes System verwendet. Die wichtigsten Methoden und ihre Systeme sind:

• Atom Transfer Radical Polymerization (ATRP) und verwandte Methoden

Hierbei wird der Wechsel der Oxidationsstufe eines Metalls wie z.B. Kupfer, Nickel oder Ruthenium, dazu verwendet, ein Gleichgewicht zwischen radikalisch wachsendem Polymerkettenende und einer unreaktiven "schlafenden" Spezies einzustellen. Beispiele sind beschrieben in:

- J.S. Wang et al., Macromolecules 28, 7901 (1995)
- J.S. Wang et al., J. Am. Chem. Soc. 117, 5614 (1995)
- M. Kato et al., Macromolecules 28, 1721 (1995)
- V. Percec et al., Macromolecules 28, 7970 (1995)

- B.B. Wayland et al., J. Am. Chem. Soc. 116, 7943 (1994)
- C. Granel et al., Macromolecules 29, 8576 (1996)

Bei der ATRP-Methode erfolgt eine reversible Homolyse einer kovalenten, inaktiven Spezies, gefolgt von einer Monomerinsertion und anschließender reversibler Rekombination. Alternativ kann auch das in der WO-A 97/47661 beschriebene Verfahren zum Einsatz kommen, das ebenfalls die Herstellung von Polymeren mit enger Molekulargewichtsverteilung (kleinem PDI) ermöglicht.

• Verwendung von Triazolinyl-Verbindungen zur kontrollierten Re-Initiierung bei der KRP.

Diese Methode ist beispielsweise in M. Steenbock et al., Macromolecules 31, 5223 (1998) beschrieben.

• katalysatischer Kettentransfer (Catalytic Chain Transfer, CCT)

Hierbei wird ein Metallkomplex, z. B. ein Cobaltkomplex, mit hoher Übertragungskonstante in geringen Mengen eingesetzt, um definierte Molekulargewichte einzustellen. Diese Methode ist z. B. in M.D. Eason et al., ACS Polymer Preprints 39(2), 455 (1998) beschrieben.

• Reversible Addition Fragmentation Chain Transfer (RAFT)

Hierbei werden Monomere in Gegenwart von Verbindungen der Formel

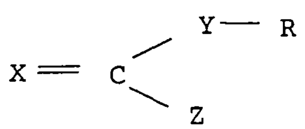

X = S, Se
Y = S, Se
R,Z = beliebige Reste

kontrolliert radikalisch polymerisiert. Einzelheiten werden in J. Chiefari et al., Macromolecules 31, 5559 (1998) beschrieben, sowie in der WO-A 97/13792. Ein verwandtes Verfahren wird in der WO-A 98/58974 und der WO-A 99/35177 beschrieben und kann ebenfalls zum Einsatz kommen.

• Initiator-Transfer-Termination (Iniferter)

Hierbei werden Verbindungen verwendet, die als Ketteninitiator, als Übertragungsagens (Transferagens) und als Kettenterminator wirken. Die Methode ist beschrieben in T. Otsu et al., in Macromolekular Design: Concept and Practice, Hrg. M.K. Mishra, S. 481, Polymer Frontiers Int., New York 1994, und in T. Otsu et al., Advances in Polymer Science 136, 75-137 (1997).

• Stable Free Radical Polymerization (SFRP)

Hierbei wird in Gegenwart stabiler Radikale polymerisiert und das Gleichgewicht zwischen wachsendem Polymerkettenende und inaktiven Spezies zur Kontrolle der Polymerisationsreaktion genutzt.
Die SFRP-Methode und die RAFT-Methode sind besonders bevorzugt.
Als stabile Radikale für die SFRP-Methode werden insbesondere stabile N-Oxyl-Radikale verwendet.
Als für die erstgenannte besonders bevorzugte Ausführungsform, also die KRP mit der SFRP-Methode, geeignete stabile N-Oxyl-Radikale kommen alle diejenigen in Betracht, die in der EP-A 135 280, der DE-A 19651307, der US-A 5,322,912, der US-A 4,581,429, der WO 96/24620, der US-A 5,412,047 sowie der DE-A 19602539 genannt sind.
Solche geeigneten, sich von einem sekundären Amin ableitenden, stabile N-Oxyl-Radikale sind z.B. jene der allgemeinen Formel Ia

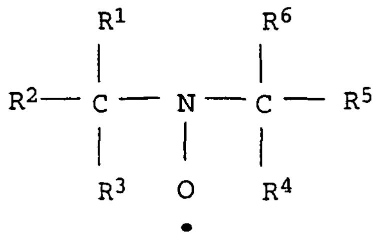

(Ia),

mit

| | |
|---|---|
| $R^1$,$R^2$,$R^5$ und $R^6$ | = dieselben oder verschiedene gerad- oder verzweigtkettige, gegebenenfalls substituierte Alkylgruppen, Cycloalkylgruppen, Aralkylgruppen oder Arylgruppen und |
| $R^3$ und $R^4$ | = dieselben oder verschiedene gerad- oder verzweigtkettige, gegebenenfalls substituierte Alkylgruppen oder |
| $R^3CNCR^4$ | = einen Teil einer zyklischen Struktur gegebenenfalls mit einem ankondensierten anderen gesättigten oder aromatischen Ring, wobei die zyklische Struktur oder der aromatische Ring gegebenenfalls substituiert sind. |

Als Verbindungen Ia kommen insbesondere jene in Betracht, die in der EP-A 135 280, der DE-A 19651307, der US-A 5,322,912, der US-A 5,412,047, der US-A 4,581,429, der DE-A 16 18 141, CN-A 1052847, US-A 4,670,131, US-A 5,322,960 sowie der DE-A 19602539 genannt sind.

Beispiele dafür sind jene stabilen N-Oxyl-Radikale der allgemeinen Formel Ia, bei welchen $R^1$, $R^2$, $R^5$ und $R^6$ für (gleiche oder verschiedene) Methyl-, Ethyl-, n-Propyl-,iso-Propyl-, n-Butyl-, iso-Butyl-, tert.-Butyl-, lineares oder verzweigtes Pentyl-, Phenyl- oder substituierte Gruppen hiervon und $R^3$ und $R^4$ für (gleiche oder verschiedene) Methyl-, Ethyl-, n-Propyl-, iso-Propyl-, n-Butyl-, iso-Butyl-, tert.-Butyl-, lineares oder verzweigtes Pentyl-, substituierte Gruppen hiervon oder - sofern $R^3CNCR^4$ einen Teil einer zyklischen Struktur bildet - die zyklische Struktur

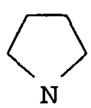 oder 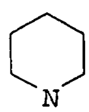 oder 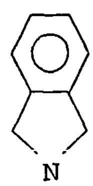 oder 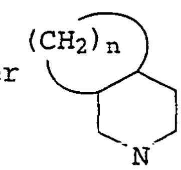 oder 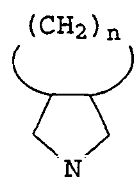

mit n gleich einer ganzen Zahl von 1 bis 10 (häufig 1 bis 6), einschließlich substituierter derartiger zyklischer Gruppen, stehen. Als beispielhafte Vertreter seien 2,2,6,6-Tetramethyl-1-oxyl-piperidin, 2,2,5,5-Tetramethyl-1-oxyl-pyrrolidin und 4-Oxo-2,2,6,6-tetramethyl-1-oxyl-piperidin genannt.

Die stabilen N-Oxyl-Radikale lassen sich aus den entsprechenden sekundären Aminen durch Oxidation, z.B. mit Wasserstoffperoxid, herstellen. In der Regel sind sie als Reinsubstanz darstellbar.

Zu den stabilen N-Oxyl-Radikalen zählen insbesondere Piperidin-oder Pyrrolidin-N-Oxyle und Di-N-Oxyle der nachstehenden allgemeinen Formeln II bis X, sowie die Radikale der allgemeinen Formeln XI bis XIII.

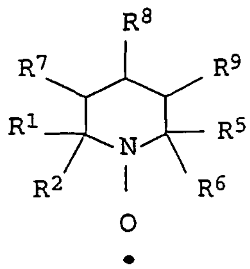

(II),

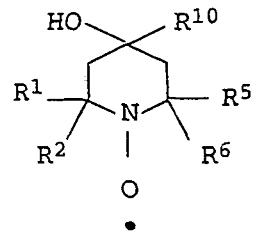

(III),

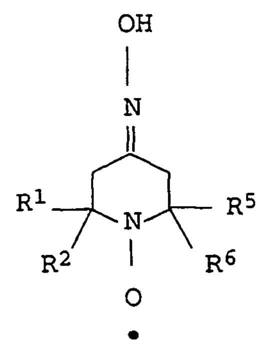

(IV),

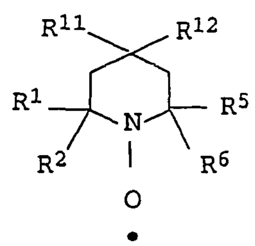

(V),

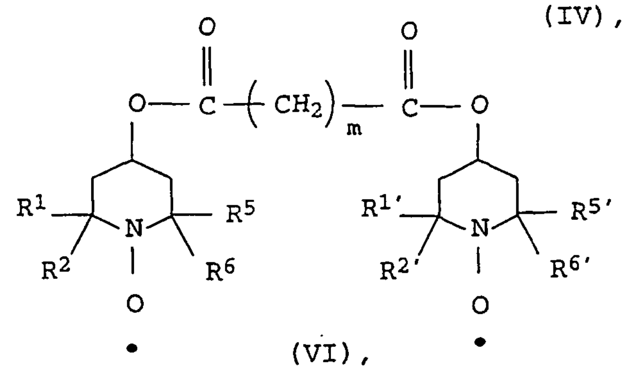

(VI),

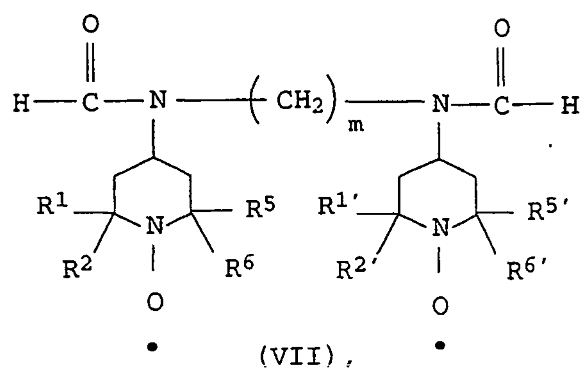

(VII),

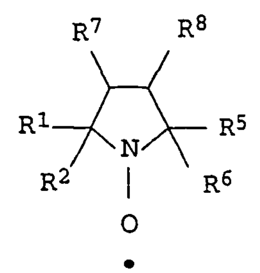

(VIII),

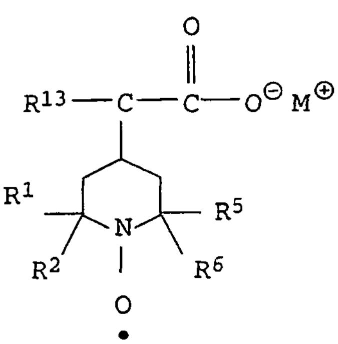

(IX),

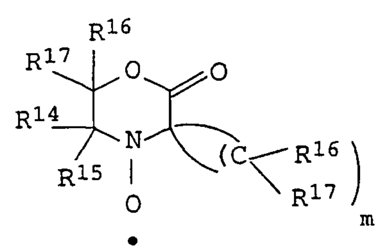

(X),

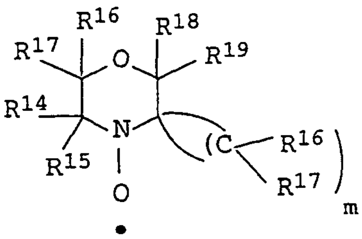

(XI),

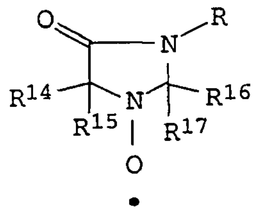

(XII),

beschrieben in Y.K. Chong et al., Macromolecules 32, 6895-6903 (2000), sowie

die Verbindung (4) auf S. 9 der WO-A 96/24620 als Radikal (XIII), mit

m = 2 bis 10,

$R^1$ bis $R^6$ = wie oben bereits definiert,

$R^7,R^8,R^9$ = unabhängig voneinander— H,

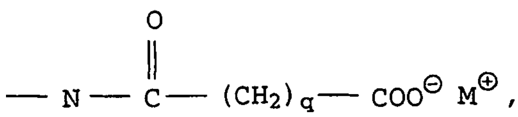

=O , $-NH_2$,

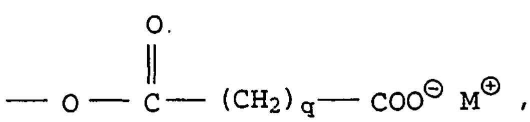

$-COO^{\ominus}M^{\oplus}$, $-SO_3^{\ominus}M^{\oplus}$, $-PO_3^{\ominus}M^{\oplus}$, $-O-PO_3^{2\ominus}M_2^{\oplus}$, $-O-SO_3^{\ominus}M^{\oplus}$, —OH,

$$-O-(CH_2-CH_2-O)_q H$$

oder

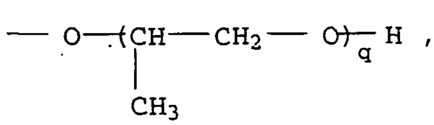

$M^{\oplus}$ = Wasserstoff- oder ein Alkalimetallion (insbesondere $K^{\oplus}$ oder $Na^{\oplus}$),

q = eine ganze Zahl von 1 bis 100,

$R^{1'}, R^{2'}, R^{5'}, R^{6'}$ = unabhängig voneinander und unabhängig von $R^1$, $R^2$, $R^5$, $R^6$ dieselben Gruppen wie $R^1$,

$R^{10}$ = -H, $C_1$- bis $C_4$-Alkyl, $-CH=CH_2$, $-C\equiv CH$, -CN,

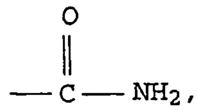

$-COO^{\ominus}M^{\oplus}$, $-COOCH_3$ oder $-COOC_2H_5$,

$R^{11}$ = ein organischer Rest, der wenigstens eine primäre, sekundäre (z.B. $-NR^1$) oder tertiäre Aminogruppe (z.B. $-NR^1R^2$) oder wenigstens eine Ammoniumgruppe $-N^{\oplus}R^{13}R^{14}R^{15}X^{\ominus}$ aufweist, mit $X^{\ominus} = F^{\ominus}$, $Cl^{\ominus}$, $Br^{\ominus}$, $HSO_4^{\ominus}$, $SO_4^{2\ominus}$, $H_2PO_4^{\ominus}$, $HPO_4^{2\ominus}$ oder $PO_4^{3\ominus}$ und $R^{13}$, $R^{14}$, $R^{15}$ voneinander unabhängige organische Reste (z.B. unabhängig voneinander dieselben Gruppen wie $R^1$),

$R^{12}$ = unabhängig von $R^{11}$ dieselben Gruppen wie $R^{11}$ oder -H, -OH, $C_1$- bis $C_4$-Alkyl, $-COO^{\ominus}M^{\oplus}$, $-C\equiv CH$,

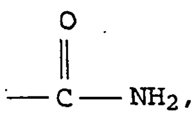 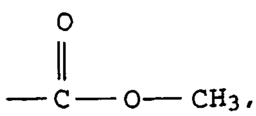 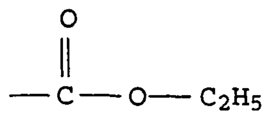

oder hydroxysubstituiertes $C_1$- bis $C_4$-Alkyl (z.B. hydroxyethyl oder hydroxypropyl) und

$R^{13}$ = —H, —$CH_3$ oder

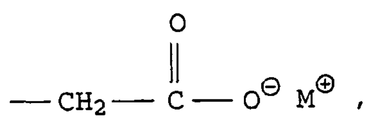

$R^{14}, R^{15}$ = unabhängig voneinander dieselbe oder verschiedene gerad- oder verzweigtkettige, gegebenenfalls substituierte Alkylgruppen oder Cycloalkylgruppen, oder gegebenenfalls substituierte $C_6$-$C_{20}$-Arylgruppen, und

$R^{16}, R^{17}, R^{18}, R^{19}$ = unabhängig voneinander Wasserstoff oder dieselben Gruppen wie $R^{14}$, $R^{15}$.

Vorzugsweise ist $R^1 = R^2 = R^5 = R^6 = R^{1'} = R^{2'} = R^{5'} = R^{6'} = -CH_3$.

Als beispielhafte Vertreter geeigneter stabiler N-Oxyl-Radikale seien genannt:

1-Oxyl-2,2,6,6-tetramethylpiperidin,
1-Oxyl-2,2,6,6-tetramethylpiperidin-4-ol,
1-Oxyl-2,2,6,6-tetramethylpiperidin-4-on,
1-Oxyl-2,2,6,6-tetramethylpiperidin-4-yl-acetat,
1-Oxyl-2,2,6,6-tetramethylpiperidin-4-yl-2-ethylhexanoat,
1-Oxyl-2,2,6,6-tetramethylpiperidin-4-yl-stearat,
1-Oxyl-2,2,6,6-tetramethylpiperidin-4-yl-benzoat,
1-Oxyl-2,2,6,6-tetramethylpiperidin-4-yl-(4-tert-butyl)benzoat,
Bis(1-oxyl-2,2,6,6-tetramethylpiperidin-4-yl)-succinat,
Bis(1-oxyl-2,2,6,6-tetramethylpiperidin-4-yl)-adipat,
Bis(1-oxyl-2,2,6,6-tetramethylpiperidin-4-yl)-sebacat,
Bis(1-oxyl-2,2,6,6-tetramethylpiperidin-4-yl)-n-butylmalonat,
Bis(1-oxyl-2,2,6,6-tetramethylpiperidin-4-yl)-phthalat,

Bis(1-oxyl-2,2,6,6-tetramethylpiperidin-4-yl)-isophthalat,
Bis(1-oxyl-2,2,6,6-tetramethylpiperidin-4-yl)-terephthalat,
Bis(1-oxyl-2,2,6,6-tetramethylpiperidin-4-yl)-hexahydroterephthalat,
N,N'-Bis(1-oxyl-2,2,6,6-tetramethylpiperidin-4-yl)-adipinamid,
N-(1-Oxyl-2,2,6,6-tetramethylpiperidin-4-yl)-caprolactam,
N-(1-Oxyl-2,2,6,6-tetramethylpiperidin-4-yl)-dodecylsuccinimid,
N,N'-Bis(1-oxyl-2,2,6,6-tetramethylpiperidin-4-yl)-N,N'-bis-formyl-1,6-diaminohexan,
4,4'-Ethylenbis(1-oxyl-2,2,6,6-tetramethylpiperazin-3-on),
Tris-(2,2,6,6-tetramethyl-1-oxyl-piperidin-4-yl)phosphit 4-Hydroxy-2,6-diphenyl-2,6-dimethyl-1-oxyl-piperidin,
4-Carboxy-2,2,6,6-tetramethyl-1-oxyl-piperidin,
4-Carboxy-2,6-diphenyl-2,6-dimethyl-1-oxyl-piperidin,
3-Carboxy-2,2,5,5-tetramethyl-1-oxyl-pyrrolidin,
3-Carboxy-2,5-diphenyl-2,5-dimethyl-1-oxyl-pyrrolidin,

das Natrium-, Ammonium- oder Kaliumsalz des Schwefelsäurehalbesters des

4-Hydroxy-2,2,6,6-tetramethyl-1-oxyl-piperidin,
5,5-Dimethyl-3-spiro-cyclopentyl-morphol-2-on-4-oxyl,
5,5-Dimethyl-3-spiro-cyclohexyl-morphol-2-on-4-oxyl,
5,5-Dimethyl-3-spiro-cyclopentyl-morpholin-4-oxyl,
5,5-Dimethyl-3-spiro-cyclohexyl-morpholin-4-oxyl,
Di-tert-butyl-nitroxyl,
N-tert-butyl-1-diethylphosphono-2,2-dimethylpropyl-nitroxyl und
N-tert-butyl-1-phenyl-2-methylpropyl-nitroxyl.

Die Verbindungen (VI) und (VII) können gemäß US-A 4665185 (z.B. Bsp. 7) sowie DE-A 19510184 erhalten werden.

Besonders bevorzugt werden N-Oxyl-Radikale eingesetzt, die gegenüber TEMPO oder 4-Oxo-TEMPO eine niedrigere Bindungsdissoziationsenthalpie zum wachsenden, radikalischen Kettenende aufweisen. Dies sind z.B. die Verbindungen der bereits genannten Formeln (X), (XI), (XII) und (XIII).

Weitere geeignete beispielhafte Vertreter sind:

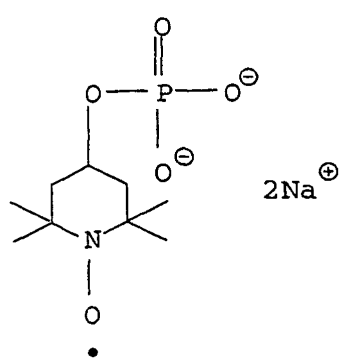

Sunamoto, Junzo; Akiyoshi, Kuzunari, Kihara, Tetsuji; Endo, Masayuki, BCS JA 8, Bull, Chem. Soc. Jpn., EN, 65, 4, 1992, S. 1041 - 1046;

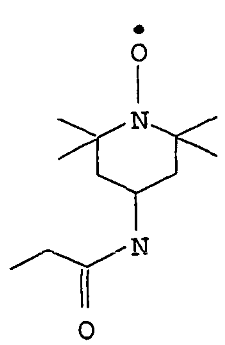

Beilstein Registry Number 6926369 ($C_{11}H_{22}N_3O_2$);

(fortgesetzt)

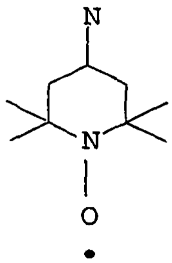

Beilstein Registry Number 6498805 (4-Amino-2,2,6,6-tetramethyl-1-oxyl-piperidin);

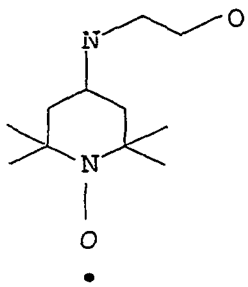

Beilstein Registry Number 6800244 ($C_{11}H_{23}N_2O_2$) ;

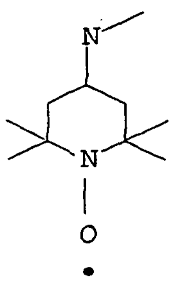

Beilstein Registry Number 5730772 (N-Methyl-4-amino-2,2,6,6-tetra-methyl-1-oxyl-piperidin;

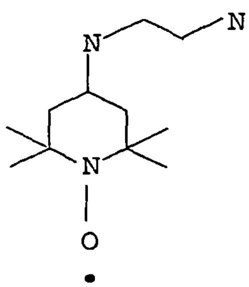

Beilstein Registry Number 5507538 (2,2,6,6-Tetramethyl-4-(2-amino-ethylamino)-1-oxyl-piperidin);

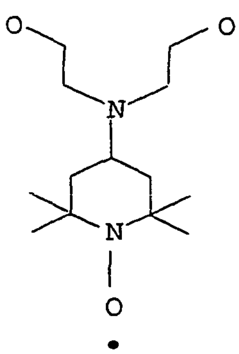

Beilstein Registry Number 4417950 (4-Bis(2-hydroxyethyl)-amino-2,2,6,6-tetramethyl-1-oxyl-piperidin);

(fortgesetzt)

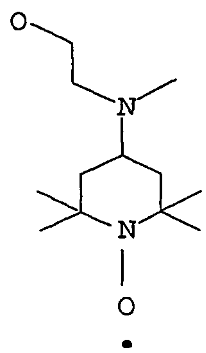

Beilstein Registry Number 4396625 ($C_{12}H_{25}N_2O_2$);

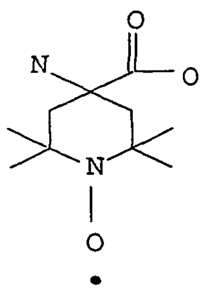

Beilstein Registry Number 4139900 (4-Amino-2,2,6,6-tetra-methyl-4-carboxy-1-oxyl-piperidin);

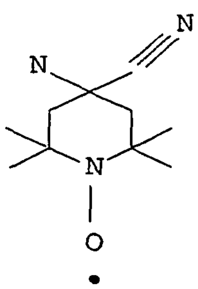

Beilstein Registry Number 4137088 (4-Amino-4-cyano-2,2,6,6-tetra-methyl-1-oxyl-piperidin);

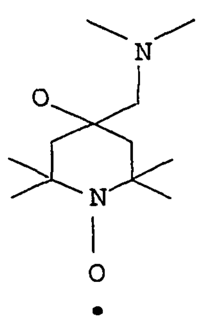

Beilstein Registry Number 3942714 ($C_{12}H_{25}N_2O_2$);

(fortgesetzt)

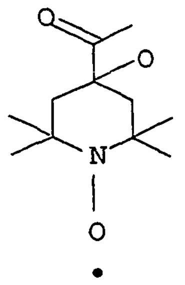

Beilstein Registry Number 1468515 (2,2,6,6-Tetramethyl-4-hydroxy-4-acetyl-1-oxyl-piperidin);

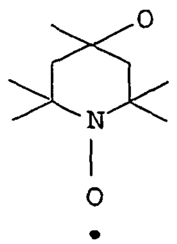

Beilstein Registry Number 1423410 (2,2,4,6,6-Pentamethyl-4-hydroxy-1-oxyl-piperidin);

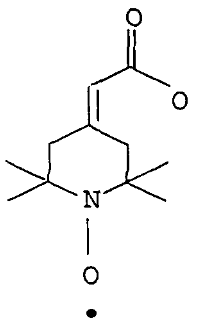

Beilstein Registry Number 6205316 (4-Carboxymethylen-2,2,6,6-tetramethyl-1-oxyl-piperidin);

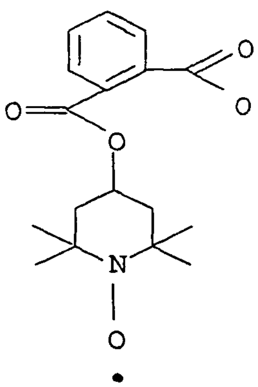

Beilstein Registry Number 1395538 (4-2-Carboxy-benzoyloxy-2,2,6,6-tetramethyl-1-oxyl-piperidin);

(fortgesetzt)

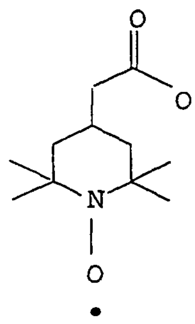

Beilstein Registry Number 3546230 (4-Carboxymethyl-2,2,6,6-tetramethyl-1-oxyl-piperidin);

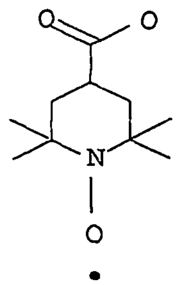

Beilstein Registry Number 3949026 (4-Carboxyl-2,2,6,6-tetra-methyl-1-oxyl-piperidin) ;

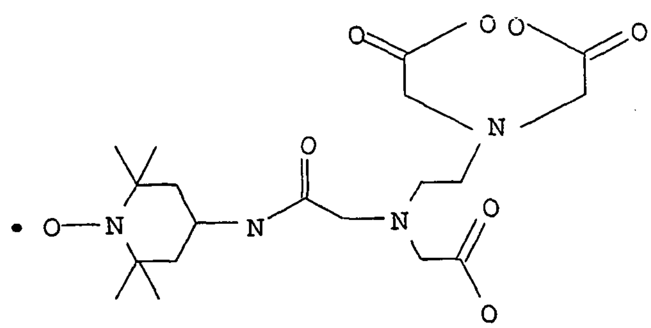

Beilstein Registry Number 4611003 (Ethylendiamintetraessig-säuremono(1-oxy-2,2,6,6-tetramethylpiperidinyl-4-amid) ;

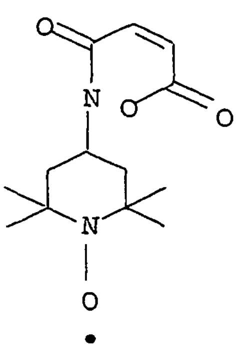

Beilstein Registry Number 5961636 ($C_{13}H_{21}N_2O_4$)

(fortgesetzt)

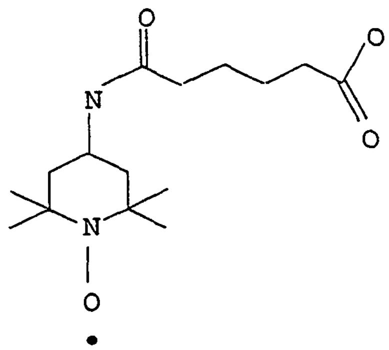

Beilstein Registry Number 5592232 ($C_{15}H_{27}N_2O_4$);

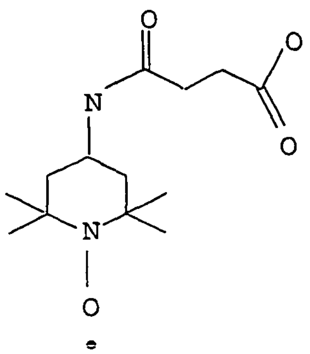

Beilstein Registry Number 5080576 (Bernsteinsäure-N-(2,2,6,6-tetramethyl-1-oxyl-4-piperidinyl)-monoamid);

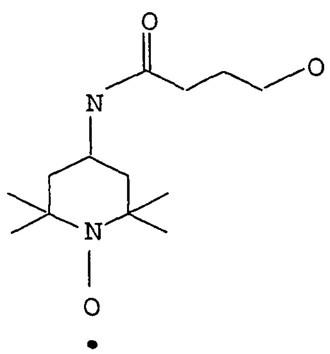

Beilstein Registry Number 5051814 (4-(4-Hydroxybutanoylamino)-2,2,6,6-tetramethyl-1-oxyl-piperidin);

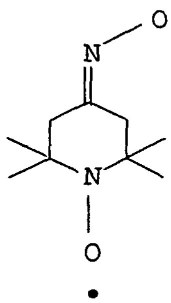

Beilstein Registry Number 4677496 (2,2,6,6-Tetramethyl-4-oximino-1-oxyl-piperidin);

(fortgesetzt)

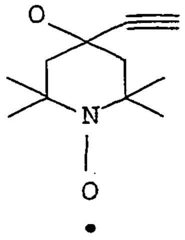

Beilstein Registry Number 1451068 ($C_{11}H_{18}NO_2$) ;

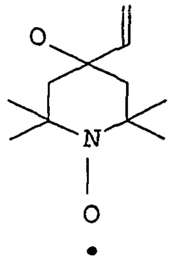

Beilstein Registry Number 1451075 ($C_{11}H_{20}NO_2$) ;

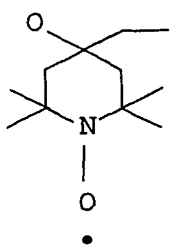

Beilstein Registry Number 1423698 (4-Ethyl-4-hydroxy-2,2,6,6-tetramethyl-1-oxyl-piperidin);

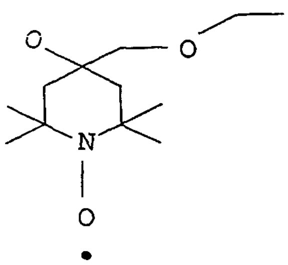

Beilstein Registry Number 5509793 (4-Ethoxymethyl-4-hydroxy-2,2,6,6 -tetramethyl-1-oxyl-piperidin);

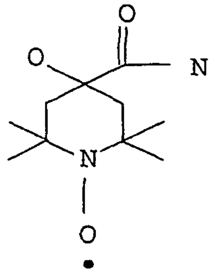

Beilstein Registry Number 3960373 ($C_{10}H_{19}N_2O_3$) ;

(fortgesetzt)

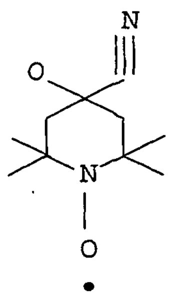

Beilstein Registry Number ($C_{10}H_{17}N_2O_2$);

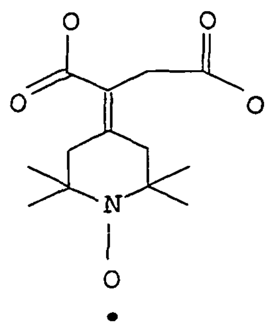

Beilstein Registry Number 3985130 (2,2,6,6-Tetramethyl-1-oxyl-4-piperidyliden-bernsteinsäure);

Selbstverständlich können auch Gemische von stabilen N-Oxyl-Radikalen angewendet werden.

Das stabile N-Oxylradikal kann je nach seinem Löslichkeitsverhalten entweder als solches, oder gelöst in organischen Lösungsmitteln wie Alkoholen, z.B. Methanol und/oder Ethanol, aber auch Ethylacetat, Cyclohexan, Toluol und/oder Dimethylformamid zugegeben werden. Es kann auch in den Monomeren selbst gelöst werden.

Die stabilen N-Oxyl-Radikale können auch im Reaktionsgemisch bei Reaktionstemperatur in situ freigesetzt werden, d.h. das Reaktionsgemisch enthält Verbindungen mit Alkoxyaminogruppen, die das N-Oxyl-Radikal bei erhöhten Temperaturen freisetzen. Geeignete Alkoxyamine sind in der EP-A 135280 und in J. Am. Chem. Soc. 121, 3904-3920 (1999) beschrieben. Die N-Oxyl-Radikale können auch aus geeigneten oligomeren bzw. polymeren Verbindungen freigesetzt werden.

Das molare Verhältnis zwischen stabilen N-Oxyl-Radikalen und radikalischem Polymerisationsinitiator (falls ein solcher verwendet wird, also nicht thermisch initiiert wird) beträgt normalerweise 0,5:1 bis 5:1, bevorzugt 0,8:1 bis 4:1.

Durch Zugabe von organischen Säuren wie Camphersulfonsäure oder p-Toluolsulfonsäure (US-A 5,322,912), durch Zugabe von Dimethylsulfoxid (US-A 5,412,047) oder 2-Fluor-1-methylpyridinium-p-toluolsulfonat (Macromolecules 28, 8453 ff (1995)) bzw. Indenylessigsäure, oder durch Zugabe von Verbindungen mit mindestens einer freien Thiolgruppe wie in der Anmeldung DE-Az. 10016651.2 beschrieben, zum Polymerisationsgemisch kann die Polymerisationsgeschwindigkeit der KRP via SFRP in der Regel erhöht werden.

Die KRP wird üblicherweise bei einem Absolutdruck im Bereich von Normaldruck bis 60 bar, bevorzugt 2 bis 45 bar, und einer Temperatur von 60 bis 200˚C, bevorzugt 70 bis 180˚C, insbesondere 80 bis 150˚C, durchgeführt.

Die Dauer der Polymerisation wählt man vorzugsweise so, daß das gewünschte Molekulargewicht erreicht wird. Üblicherweise beträgt die Dauer 1 Stunde bis 6 Tage.

Die erfindungsgemäßen thermoplastischen Formmassen können als solche verwendet werden oder mit anderen Polymeren und/oder Zusatzstoffen abgemischt werden.

Solche anderen Polymere sind insbesondere thermoplastische Polymere. Zu solchen Polymeren zählen Polyester wie Polyethylenterephthalat und Polybutylenterephthalat, Polycarbonate, Polyamide, Polyoxymethylen, Polystyrol, Polyolefine wie Polyethylen und Polypropylen, Polyvinylchlorid und Styrolcopolymere wie Polystyrolacrylnitril.

Die Menge der anderen Polymere beträgt üblicherweise 0 bis 99 Gew.-%, bevorzugt 0 bis 90 Gew.-%, bezogen auf die Summe aus Blockcopolymeren und anderen Polymeren.

Als Zusatzstoffe kommen übliche Zusatzstoffe, wie z.B. Gleit-oder Entformungsmittel, Farbmittel, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen, in Betracht.

Geeignete Gleit- und Entformungsmittel sind z.B. Fettsäuren wie etwa Stearinsäuren, Stearylalkohol, Fettsäureester mit 6-20 C-Atomen wie z.B. Stearinsäureester, Metallsalze der Fettsäuren wie z.B. Mg-, Ca-, Al-, Zn-stearat,

Fettsäureamide wie Stearinsäureamide, sowie Siliconöle, Montanwachse und solche auf Basis von Polyethylen und Polypropylen, weiterhin Kohlenwasserstoff-Öle, Paraffine und Carbonsäureester aus langkettigen Carbonsäuren und Ethanol, Fettalkoholen, Glycerin, Ethandiol, Pentaerythrit oder anderen Alkoholen.

Farbmittel sind insbesondere Pigmente und Farbstoffe. Pigmente sind beispielsweise Titandioxid, Phthalocyanine, Ultramarinblau, Eisenoxide oder Ruß, sowie die Klasse der organischen Pigmente. Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien (Wärmestabilisatoren) sind etwa sterisch gehinderte Phenole, Hydrochinone, verschiedene substituierte Vertreter dieser Gruppe, sowie deren Mischungen. Sie sind etwa als Topanol® oder Irganox® im Handel erhältlich.

Geeignete Stabilisatoren gegen Lichteinwirkung sind z.B. verschiedene substituierte Resorcine, Salicylate, Benzotriazole, Zimtsäureverbindungen, organische Phosphite und Phosphonite, Benzophenone, HALS (Hindered Amine Light Stabilizers), wie sie z.B. als Tinuvin® kommerziell erhältlich sind.

Als Stabilisatoren können ebenso Ester und/oder Amide der β-(3,5-di-tert.-butyl-4-hydroxyphenylpropionsäure und/oder Benztriazole eingesetzt werden. Beispielhaft sind mögliche Antioxidantien in EP-A 698637 und EP-A 669367 erwähnt. Insbesondere kann man als phenolische Antioxidantien 2,6-Di-tert.-butyl-4-methylphenol, Pentaerythrityltetrakis-[3- (3,5-di-tert.-butyl-4-hydroxyphenyl)propionat und N,N'-Di-(3,5-di-tert.-butyl-4-hydroxyphenyl-propionyl)-hexamethylendiamin verwenden.

Die genannten Stabilisatoren können einzeln oder in Mischung verwendet werden.

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat, Kreide, gepulverter Quarz, Glimmer, Mica, Bentonite, Talkum, Feldspat oder insbesondere Calciumsilikate wie Wollastonit oder Kaolin.

Geeignete Antistatika sind beispielsweise Aminderivate wie N,N-Bis(hydroxyalkyl)alkylamine oder -alkylenamine, Polyethylenglycolester und Glycerinmono- und -distearate, sowie deren Mischungen.

Die einzelnen Zusatzstoffe werden in den jeweils üblichen Mengen verwendet. Üblicherweise verwendet man die Zusatstoffe in einer Menge von 0 bis 50 Gew.-%, bezogen auf die Summe aus A) und B) und Zusatzstoffen.

Die Abmischung der thermoplastischen Formmassen mit den anderen Polymeren und/oder den Zusatzstoffen erfolgt kontinuierlich oder diskontinuierlich nach an sich bekannten Mischverfahren, beispielsweise unter Aufschmelzen in einem Extruder, Banbury-Mischer, Kneter, Walzenstuhl oder Kalander. Die Komponenten können jedoch auch "kalt" vermischt werden und das Gemisch wird erst bei der Verarbeitung aufgeschmolzen und homogenisiert. Üblicherweise erfolgt das Vermischen bei Temperaturen von 130 bis 350°C, bevorzugt 160 bis 280°C, insbesondere 190 bis 240°C. Die Verwendung von Entgasungsvorrichtungen ist bevorzugt.

Bevorzugt erfolgt die Abmischung in einem üblichen Extruder, wobei die Komponenten gemischt oder einzeln beispielsweise vollständig über einen Trichter in den Extruder eingeführt oder auch anteilig an späterer Stelle des Extruders zum geschmolzenen oder festen, im Extruder befindlichen Produkt eingeführt werden können.

Die erhaltenen Mischungen können beispielsweise pelletiert oder granuliert oder nach allgemein bekannten Verfahren, beispielsweise durch Extrusion, Spritzguß, Aufschäumen mit Treibmitteln, oder Kalandrierung verarbeitet werden.

Aus den Formmassen lassen sich Formkörper (auch Halbzeuge, Folien, Filme und Schäume) aller Art herstellen. Die Formmassen zeichnen sich durch eine deutlich verbesserte Schlagzähigkeit aus, die nicht auf Kosten anderer vorteilhafter Eigenschaften erzielt wird. Insbesondere bleibt die gute Fließfähigkeit der Formmassen erhalten.

Demgemäß wurde ein Verfahren zur Erhöhung der Schlagzähigkeit von kautschukhaltigen Styrolcopolymeren, dadurch gekennzeichnet, daß man als Hartphase ein von dem Kautschuk getrennt hergestelltes Styrolhomo- oder Styrolcopolymer mit kleiner Polydispersität ausgedrückt durch einen Polydispersitätsindex (PDI)

$$PDI = \frac{\text{gewichtsmittleres Molekulargewicht } \overline{M_w}}{\text{zahlenmittleres Molekulargewicht } \overline{M_n}} \leq 2,3.$$

verwendet, gefunden. Das erfindungsgemäße Verfahren hat den Vorteil, daß die Partikelgrößenverteilung der Kautschukphase A sehr gut kontrollierbar ist. Außerdem kann jeder gewünschte Kautschukgehalt in den erfindungsgemäßen Bereich in einem Verarbeitungsschritt eingestellt werden. Phaseninversion wird vermieden und das Verfahren ist flexibel. Ferner kann, sofern die Komponente A ein Pfropfkautschuk ist, bei dem eine Styrolverbindung, bevorzugt Styrol und weitere Monomere, bevorzugt Acrylnitril, die Pfropfmonomeren sind, die Art und das Verhältnis von Styrol zu den Comonomeren in der Komponente A sich von der Art und dem Verhältnis von Styrol zu Comonomeren in der Hartmatrix B unterscheiden. Nach einer bevorzugten Ausführungsform unterscheidet sich das Verhältnis von der Styrolverbindung zu Comonomeren in A von dem Verhältnis der Styrolverbindung zu den Comonomeren in B.

Schließlich wurde die Verwendung von einem von dem Kautschuk getrennt hergestellten Styrolhomo- oder Styrolcopolymeren mit kleiner Polydispersität ausgedrückt durch einen Polydispersitätsindex PDI

$$\mathrm{PDI} = \frac{\text{gewichtsmittleres Molekulargewicht } \overline{M_w}}{\text{zahlenmittleres Molekulargewicht } \overline{M_n}} \leq 2{,}3$$

zur Erhöhung der Schlagzähigkeit von kautschukhaltigen Styrolcopolymeren, gefunden.

Zu den erwähnten Teilchengrößen seien folgende Erläuterungen angefügt:

Bei der Angabe der gewichtsmittleren Teilchengröße d der Komponente A handelt es sich um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben.

Der $d_{10}$-Wert gibt denjenigen Teilchendurchmesser an, bei dem 10 Gew.-% aller Teilchen einen kleineren und 90 Gew.-% einen größeren Durchmesser haben. Umgekehrt gilt für den $d_{90}$-Wert, daß 90 Gew.-% aller Teilchen einen kleineren und 10 Gew.-% einen größeren Durchmesser haben als derjenige Durchmesser, der dem $d_{90}$-Wert entspricht. Der gewichtsmittlere Teilchendurchmesser $d_{50}$ bzw. volumenmittlere Teilchendurchmesser $d_{50}$ gibt denjenigen Teilchendurchmesser an, bei dem 50 Gew.-% bzw. Vol.-% aller Teilchen einen größeren und 50 Gew.-% bzw. Vol.-% einen kleineren Teilchendurchmesser aufweisen. $d_{10}$-, $d_{50}$- und $d_{90}$-Wert charakterisieren die Breite Q der Teilchengrößenverteilung, wobei $Q = (d_{90}-d_{10})/d_{50}$. Je kleiner Q ist, desto enger ist die Verteilung.

Beispiele:

Es wurden folgende Komponenten verwendet:

Komponente A): Kautschukphase

A1: Polybutadien-Pfropfkautschuk-Pulver bestehend aus einem Pfropfkautschuk, hergestellt durch Emulsionspolymerisation und Ausfällen des Pfropfkautschuks mit Schwefelsäure, Grundstufe aus 100 Gew.-% Butadien und Pfropfstufe aus 70 Gew.-% Styrol und 30 Gew.-% Acrylnitril, Gewichtsverhältnis Grundstufe/Pfropfstufe 40:60, Teilchengröße $d_{50}$ des Pfropfkautschuks 270 nm.

A2: Polybutadien-Pfropfkautschuk-Pulver bestehend aus einem Pfropfkautschuk, hergestellt durch Emulsionspolymerisation und Ausfällen des Pfropfkautschuks mit Magnesiumsulfat, Grundstufe aus 100 Gew.-% Butadien und Pfropfstufe aus 73 Gew.-% Styrol und 27 Gew.-% Acrylnitril, Gewichtsverhältnis Grundstufe/Pfropfstufe 40:60, Teilchengröße $d_{50}$ des Pfropfkautschuks 270 nm.

A3: Polybutadien-Pfropfkautschuk-Pulver, bestehend aus einem Pfropfkautschuk, hergestellt durch Emulsionspolymerisation und Ausfällen des Pfropfkautschuks mit Magnesiumsulfat, Grundstufe aus 100 Gew.-% Butadien und Pfropfstufe aus 79 Gew.-% Styrol und 21 Gew.-% Acrylnitril, Gewichtsverhältnis Grundstufe/Pfropfstufe 62/38, Teilchengröße $d_{50}$ des Pfropfkautschuks 150 nm.

Komponente B) : Hartphase

Es wurden verschiedene Copolymere aus Styrol und Acrylnitril eingesetzt, die sich in ihren Molmassen, ihrem Acrylnitril-Gehalt und ihrem Herstellungsverfahren unterscheiden. Die nachfolgende Tabelle 1 enthält diese Einzelheiten.

Das gewichtsmittlere Molekulargewicht $\bar{M}_w$ und das zahlenmittlere Molekulargewicht $\bar{M}_n$ wurden durch Gelpermeationschromatographie bestimmt. Für die Proben $B_1$ bis $B_8$ wurde jeweils eine 0,2 %ige Lösung einer Mischung aus 95 Gew.-% Tetrahydrofuran und 5 Gew.-% Essigsäure, abfiltriert über einen 0,2 $\mu$m Teflonfilter, als Eluent, einer Flußrate von 1 ml/min, einer Chromatographiesäule, Styroldivinylbenzolgelsäule, Typ Ultra Styragel von Fa. Waters bei 25˚C, und Polystyrol (Molgewichtsbereich 500 000 bis 1000000) als Kalibrationsstandards verwendet. Die Detektion erfolgte über den Brechungsindex. Die Bestimmung der Proben $B_9$ bis $B_{11}$ unterschied sich von der der Proben $B_1$ bis $B_8$ darin, dass als Eluent Tetrahydrofuran eingesetzt wurde, die Flußrate 1,2 ml/min betrug und eine Styroldivinylbenzolgelsäule der Firma M2-Analysetechnik bei 35˚C eingesetzt wurde.

Tabelle 1: Komponente B)

| | Styrol [Gew.-%] | Acrylnitril [Gew.-%] | $\bar{M}_n$ [g/mol] | $\bar{M}_w$ [g/mol] | $\bar{M}_w/\bar{M}_n$ = PDI | Herstellungsverfahren |
|---|---|---|---|---|---|---|
| B1 | 70 | 30 | 52 000 | 110 000 | 2,1 | Masse |
| B2 | 71,5 | 28,5 | 46 000 | 110 000 | 2,4 | Emulsion |
| B3 | 72 | 28 | 50 000 | 120 000 | 2,4 | Emulsion |
| B4 | 68 | 32 | 83 000 | 188 000 | 2,3 | Masse |
| B5 | 72,5 | 27,5 | 77 000 | 240 000 | 3,1 | Emulsion |
| B6 | 72 | 28 | 93 000 | 370 000 | 4,0 | Emulsion |
| B7 | 67 | 33 | 44 000 | 110 000 | 2,5 | Masse |
| B8 | 70 | 30 | 53 000 | 100 000 | 1,9 | Masse |
| B9 | 75 | 25 | 39 000 | 88 000 | 2,3 | Emulsion |
| B10 | 75 | 25 | 38 000 | 80 000 | 2,1 | KRP |
| B11 | 75 | 25 | 45 000 | 75 000 | 1,7 | KRP |

Die Komponenten B1, B4 und B8 haben - erfindungsgemäß - einen PDI ≤ 2,3. Die Komponenten B2, B3, B5, B6 und B7 wurden zum Vergleich eingesetzt und haben - nicht erfindungsgemäß - einen PDI > 2,3.

Herstellung der Formmassen und Eigenschaften

Die Komponenten A) und B) wurden auf einem Mischextruder ZSK 30 von Werner und Pfleiderer bei 250˚C und 10 kg/h Durchsatz innig vermischt, ausgetragen und granuliert. Aus dem Granulat wurden auf einer Spritzgußmaschine (250˚C Schmelztemperatur, 60˚C Werkzeugoberflächentemperatur) Probekörper hergestellt.

Folgende Eigenschaften wurden bestimmt:

Charpy: a) Die Schlagzähigkeit nach Charpy wurde an Norm-Kleinstäben (50 x 6 x 4 mm) durch Schlagbiegeversuch nach ISO 179/2C (1982, U-Kerbe, Höhe unter Kerbe: 27 + 0,2 mm) bei 23˚C bestimmt.

b) Die Schlagzähigkeit wurde nach Charpy an Prüfstäben (80 x 10 x 4 mm) durch Schlagbiegeversuch nach ISO 179-2/IeA(F) bei 23˚C bzw. 40˚C bestimmt.

Izod: die Schlagzähigkeit nach Izod wurde an Stäben 63,5 x 6,4 x 12,7 mm durch Schlagbiegeversuch nach ISO 180/3A (1982, V-Kerbe, Höhe unter Kerbe: 10 + 0,2 mm) bei 23˚C bestimmt.

Impact Falling Dart: die Schlagzähigkeit nach der Impact Falling Dart-Methode wurde an einem an der Unterseite offenen Kasten mit Schlag auf die Oberseite des Kastens nach ASTM D3029-82a bei 23˚C (LEGO Standard RM 2.02, Version 1, 1993) bestimmt.

MVR: der Schmelzvolumenindex MVR wurde am Granulat nach ISO 1133 bei 220˚C Schmelzetemperatur und 10 kg Belastung bestimmt.

Die Tabelle 2 fasst die Zusammensetzung der Formmassen und die Ergebnisse zusammen.

Tabelle 2: Formmassen

| Beispiele[1)] | Komponente A) [Gew.-teile] | Komponente B) [Gew.-Teile] | PDI von B) | Izod [kJ/m$^2$] | Charpy[a)] [kJ/m$^2$] 23˚C | Charpy[b)] 23˚C -40˚C [kJ/m$^2$] | Impact Fal. Dart [cm] | MVR (220˚C/ 10kg) [ml/ 10min] |
|---|---|---|---|---|---|---|---|---|
| 1 | 50 A1 | 50 B1 | 2,1 | 37 | - | - - | - | 19,4 |
| 2V | 50 A1 | 50 B2 | 2,4 | 35 | - | - - | - | 19,4 |
| 3V | 50 A1 | 50 B3 | 2,4 | 31 | - | - - | - | 18,3 |
| 4 | 50 A1 | 50 B4 | 2,3 | 43 | - | - - | - | 4,4 |
| 5V | 50 A1 | 50 B5 | 3,1 | 37 | - | - - | - | 5,1 |
| 6V | 50 A1 | 50 B6 | 4,0 | 33 | - | - - | - | - |
| 7V | 47,5 A1 | 52,5 B7 | 2,5 | - | - | - - | 47 | 33,3 |
| 8 | 47,5 A1 | 52,5 B1 | 2,1 | - | - | - - | 58 | 34,0 |
| 9 | 47,5 A1 | 52,5 B8 | 1,9 | - | - | - - | 58 | 34,0 |
| 10V | 45 A2 | 55 B7 | 2,5 | 21 | 13 | - - | - | 17,9 |
| 11 | 45 A2 | 55 B1 | 2,1 | 23 | 14 | - | - | 18,0 |
| 12 | 45 A2 | 55 B8 | 1,9 | 24 | 15 | - | - | 17,0 |
| 13V | 30 A3 | 70 B9 | 2,3 | - | - | 8,0 2,7 | - | 42,0 |
| 14 | 30 A3 | 70 B10 | 2,1 | - | - | 15,4 5,5 | - | 46,9 |
| 15 | 23 A3 | 77 B11 | 1,7 | - | - | 12,6 8,0 | - | 45,4 |

[1)] V zum Vergleich
- nicht bestimmt

Die Beispiele lassen sich in fünf Gruppen aufteilen:

1) In den Beispielen 1, 2V und 3V beträgt die zahlenmittlere Molmasse $\overline{M}_n$ der Komponente B) ca. 50 000 (46 000-52 000) und die gewichtsmittlere Molmasse $\overline{M}_w$ ca. 115 000 (110 000-120 000), und der Anteil der Komponente

B) 50 Gew.-%.

2) In den Beispielen 4, 5V und 6V beträgt $\bar{M}_n$ ca. 83 000 (77 000-93 000) und $\bar{M}_w$ 188.000-370.000, und der Anteil von B) 50 Gew.-%.

3) In den Beispielen 7V, 8 und 9 beträgt $\bar{M}_n$ ca. 50 000 (44 000-53 000) und $\bar{M}_w$ ca. 110 000 (100 000-110 000), und der Anteil von B) 52,5 Gew.-%.

4) In den Beispielen 10V, 11 und 12 beträgt $\bar{M}_n$ ca. 50 000 (44 000-53 000) und $\bar{M}_w$ ca. 110.000 (100 000-110 000), und der Anteil von B) 55 Gew.-%.

5) In den Beispielen 13V, 14 und 15 beträgt $\bar{M}_n$ ca. 40 000 (38 000-45 000) und $\bar{M}_n$ ca. 80 000 (75 000-88 000), und der Anteil von B) 70 Gew.-%.

Für jede dieser fünf Beispielgruppen zeigt die Tabelle, daß die Schlagzähigkeit der erfindungsgemäßen Formmassen, enthaltend B) mit einem PDI ≤ 2,3, höher ist als bei den nicht erfindungsgemäßen Formmassen, die B) mit einem PDI > 2,3 enthalten.

Darüberhinaus zeigt die Tabelle, daß die Verbesserung der Schlagzähigkeit nicht auf Kosten der Fließfähigkeit der Formmassen erzielt wird: die MVR der erfindungsgemäßen und der nicht erfindungsgemäßen Formmassen in jeder der vier Gruppen sind auf gleichem Niveau.

**Patentansprüche**

**1.** Thermoplastische Formmassen enthaltend, bezogen auf die Formmasse,

A) 5 bis 80 Gew.-% mindestens einer Kautschukphase aus einem kautschukelastischen Polymerisat mit einer Glasübergangstemperatur Tg von 0°C oder darunter, und
B) 20 bis 95 Gew.-% mindestens einer nicht in Gegenwart von A) hergestellten Hartphase aus einem Styrolhomopolymeren oder Styrolcopolymeren aus Styrol und/oder α-Methylstyrol mit Methylmethacrylat, N-Phenylmaleinimid, Maleinsäureanhydrid oder Acrylnitril oder Mischungen der genannten Monomeren mit kleiner Polydispersität ausgedrückt durch einen Polydispersitätsindex (PDI)

$$PDI = \frac{\text{gewichtsmittleres Molekulargewicht } \overline{M_w}}{\text{zahlenmittleres Molekulargewicht } \overline{M_n}} \leq 2,3.$$

**2.** Thermoplastische Formmassen nach Anspruch 1, wobei die Kautschukphase A) ein Pfropfpolymerisat ist, enthaltend, bezogen auf A),

a1) 30 bis 95 Gew.-% einer kautschukelastischen Grundstufe aus, bezogen auf a1)
a11) 50 bis 100 Gew.-% eines ($C_1$-$C_{10}$-Alkyl)esters der Acrylsäure,
a12) 0 bis 10 Gew.-% eines polyfunktionellen, vernetzenden Monomeren,
a13) 0 bis 40 Gew.-% von einem oder mehreren weiteren monoethylenisch ungesättigten Monomeren,

oder aus

a11*) 50 bis 100 Gew.-% eines Diens mit konjugierten Doppelbindungen,
a12*) 0 bis 50 Gew.-% von einem oder mehreren monoethylenisch ungesättigten Monomeren,

oder aus

a11**) 50 bis 100 Gew.-% einer Mischung aus Ethylen, Propylen und einem Dien,
a12**) 0 bis 50 Gew.-% von einem oder mehreren weiteren monoethylenisch ungesättigten Monomeren, und
a2) 5 bis 70 Gew.-% einer Pfropfstufe aus, bezogen auf a2),
a21) 50 bis 100 Gew.-% einer Styrolverbindung der allgemeinen Formel I

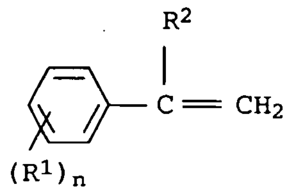

(I)

mit $R^1$, $R^2$: unabhängig voneinander H oder $C_1$-$C_8$-Alkyl n: 0, 1, 2 oder 3,
a22) 0 bis 40 Gew.-% Acrylnitril oder Methacrylnitril oder deren Mischungen,
a23) 0 bis 40 Gew.-% von einem oder mehreren weiteren monoethylenisch ungesättigten Monomeren.

**3.** Thermoplastische Formmassen nach den Ansprüchen 1 und 2, wobei die Hartphase B) Polystyrol, ein Copolymeres aus Styrol und Acrylnitril, ein Copolymerisat aus α-Methylstyrol und Acrylnitril oder ein Copolymerisat aus Styrol und Methylmethacrylat ist.

**4.** Thermoplastische Formmassen nach den Ansprüchen 1 bis 3, wobei die Hartphase B) ein Copolymerisat aus Styrol und Acrylnitril ist.

**5.** Thermoplastische Formmassen nach den Ansprüchen 1 bis 4, wobei der PDI der Hartphase B) 2,0 oder kleiner ist.

**6.** Verwendung von thermoplastischen Formmassen nach den Ansprüchen 1 bis 5 zur Herstellung von Formkörpern, Folien, Fasern und Schäumen.

**7.** Formkörper, Folien, Fasern und Schäume erhältlich aus den thermoplastischen Formmassen nach den Ansprüchen 1 bis 5.

## Claims

**1.** A thermoplastic molding composition comprising, based on the molding composition,

A) from 5 to 80% by weight of at least one rubber phase made from an elastomeric polymer with a glass transition temperature Tg of 0°C or below, and
B) from 20 to 95% by weight of at least one hard phase not prepared in the presence of A) and made from a styrene homopolymer or styrene copolymer made from styrene and/or α-methylstyrene with methyl methacrylate, N-phenylmaleimide, maleic anhydride or acrylonitrile or a mixture thereof, with low polydispersity expressed via a polydispersity index:

$$PDI = \frac{\text{weight average molecular weight } \overline{M_w}}{\text{number average molecular weight } \overline{M_n}} \leq 2.3.$$

**2.** The thermoplastic molding composition according to claim 1, where the rubber phase A) is a graft polymer comprising, based on A),

a1) from 30 to 95% by weight of an elastomeric core made from, based on a1)
a11) from 50 to 100% by weight of a $C_1$-$C_{10}$-alkyl ester of acrylic acid,
a12) from 0 to 10% by weight of a polyfunctional crosslinking monomer, and
a13) from 0 to 40% by weight of one or more other monoethylenically unsaturated monomers,

or made from

a11*) from 50 to 100% by weight of a diene having conjugated double bonds, and
a12*) from 0 to 50% by weight of one or more monoethylenically unsaturated monomers,

or made from

a11**) from 50 to 100% by weight of a mixture made from ethylene, from propylene and from a diene, and
a12**) from 0 to 50% by weight of one or more other monoethylenically unsaturated monomers, and
a2) from 5 to 70% by weight of a graft made from, based on a2),
a21) from 50 to 100% by weight of a styrene compound of the formula I

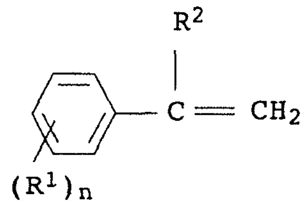

(I)

where $R^1$ and $R^2$, independently of one another are H or $C_1$-$C_8$-alkyl, and
n: is 0, 1, 2 or 3,
a22) from 0 to 40% by weight of acrylonitrile, or methacrylonitrile, or a mixture of these, and
a23) from 0 to 40% by weight of one or more other monoethylenically unsaturated monomers.

**3.** The thermoplastic molding composition according to claim 1 or 2, where the hard phase B) comprises polystyrene, a copolymer of styrene and acrylonitrile, a copolymer of α-methylstyrene and acrylonitrile or a copolymer of styrene and methyl methacrylate.

**4.** The thermoplastic molding composition according to any of claims 1 to 3, where the hard phase B) is a copolymer made from styrene and acrylonitrile.

**5.** The thermoplastic molding composition according to any of claims 1 to 4, where the PDI of the hard phase B) is 2.0 or below.

**6.** The use of a thermoplastic molding composition according to any of claims 1 to 5 for producing moldings, films, fibers or foams.

**7.** A molding, film, fiber or foam obtainable from a thermoplastic molding composition according to any of claims 1 to 5.

**Revendications**

**1.** Masses de moulage thermoplastiques contenant, par rapport à la masse de moulage,

A) 5 à 80 % en poids d'au moins une phase caoutchouteuse à base d'un polymère élastique comme du caoutchouc présentant une température de transition vitreuse Tg de 0°C ou moins, et
B) 20 à 95 % en poids d'au moins une phase dure non préparée en présence de A) et en un homopolymère de styrène ou copolymère de styrène à base de styrène et/ou d'α-méthylstyrène avec du méthacrylate de méthyle, du N-phénylmaléinimide, de l'anhydride maléique

ou de l'acrylonitrile ou des mélanges des monomères cités, présentant une petite polydispersité exprimée par un indice de polydispersité (PDI)

$$PDI = \frac{\text{poids moléculaire moyen pondéral } \overline{M_w}}{\text{poids moléculaire moyen numérique } \overline{M_n}} \leq 2,3$$

**2.** Masses de moulage thermoplastiques suivant la revendication 1, dans lesquelles la phase caoutchouteuse A) est

un polymère greffé contenant, par rapport à A),

a1) de 30 à 95 % en poids d'une base élastique comme du caoutchouc à base, par rapport à a1),
a11) de 50 à 100 % en poids d'un ester alkylique en $C_1$-$C_{10}$ de l'acide acrylique,
a12) de 0 à 10 % en poids d'un monomère réticulant polyfonctionnel,
a13) de 0 à 40 % en poids d'un ou de plusieurs autres monomères monoéthyléniquement insaturés,

ou à base

a11*) de 50 à 100 % en poids d'un diène à doubles liaisons conjuguées,
a12*) de 0 à 50 % en poids d'un ou de plusieurs monomères monoéthyléniquement insaturés,

ou à base

a11**) de 50 à 100 % en poids d'un mélange d'éthylène, de propylène et d'un diène,
a12**) de 0 à 50 % en poids d'un ou de plusieurs autres monomères monoéthyléniquement insaturés, et
a2) 5 à 70 % en poids d'une phase de greffage à base, par rapport à a2),
a21) de 50 à 100 % en poids d'un composé de styrène de la formule générale I :

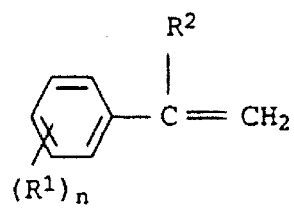

(I)

dans laquelle $R^1$, $R^2$ représentent, indépendamment l'un de l'autre, H ou un groupe alkyle en $C_1$-$C_8$,
n vaut 0, 1, 2 ou 3,
a22) de 0 à 40 % en poids d'acrylonitrile ou de méthacrylonitrile ou de leurs mélanges,
a23) de 0 à 40 % en poids d'un ou de plusieurs autres monomères monoéthyléniquement insaturés.

**3.** Masses de moulage thermoplastiques suivant les revendications 1 et 2, dans lesquelles la phase dure B) est du polystyrène, un copolymère de styrène et d'acrylonitrile, un copolymère d'α-méthylstyrène et d'acrylonitrile ou un copolymère de styrène et de méthacrylate de méthyle.

**4.** Masses de moulage thermoplastiques suivant les revendications 1 à 3, dans lesquelles la phase dure B) est un copolymère de styrène et d'acrylonitrile.

**5.** Masses de moulage thermoplastiques suivant les revendications 1 à 4, dans lesquelles le PDI de la phase dure B) est de 2,0 ou moins.

**6.** Utilisation de masses de moulage thermoplastiques suivant les revendications 1 à 5, pour la préparation de corps façonnés, de feuilles, de fibres et de mousses.

**7.** Corps façonnés, feuilles, fibres et mousses que l'on peut obtenir à partir des masses de moulage thermoplastiques suivant les revendications 1 à 5.